# EUROPEAN PATENT APPLICATION

(11) **EP 3 572 267 A1**
(43) Date of publication of application: **27.11.2019**
(21) Application number: 19172618.1
(22) Date of filing: 03.05.2019
(51) Int. Cl.: B60K 23/02

(54) **CLUTCH ENGAGING/RELEASING DEVICE**

(30) Priority: 23.05.2018 JP 2018098852
(71) Applicant: TOYOTA JIDOSHA KABUSHIKI KAISHA, Toyota-shi, Aichi-ken, 471-8571 (JP)
(72) Inventor: KITAI, Shinya, Toyota-shi, Aichi-ken, 471-8571 (JP); YAMAMOTO, Kazuhiro, Toyota-shi, Aichi-ken, 471-8571 (JP)
(74) Representative: Kuhnen & Wacker Patent- und Rechtsanwaltsbüro PartG mbB

(57) **Abstract**

A clutch engaging/releasing device (10; 118; 158) for engaging and releasing a clutch (16) includes a separating mechanism (76; 120; 160) provided in a force transmitting mechanism (65) between a clutch pedal (50) and a clutch cylinder (54). The separating mechanism (76; 120; 160) includes a first member (78; 122; 162), a second member (80; 124; 164) and a reaction-force generating mechanism (102; 135; 177). The reaction-force generating mechanism (102; 135; 177) includes a pressing member (82; 128; 168) and an inclined surface (94b; 126a, 134; 176) that is provided for converting a load (F) applied to the inclined surface (94b; 126a, 134; 176) from the pressing member (82; 128; 168), into a pedal reaction force (F2; F3; F2) acting against the clutch pedal (50) when the first member (78; 122; 162) is moved toward the second member (80; 124; 164) by the operation of the clutch pedal (50) after the first and second members (78, 80; 122, 124; 162, 164) have been separated from each other.

## Description

### FIELD OF THE INVENTION

The present invention relates to a clutch engaging/releasing device for engaging and releasing a clutch by a depressing operation of a clutch pedal and an operation of an actuator.

### BACKGROUND OF THE INVENTION

There is proposed an arrangement in which a clutch can be engaged and released not only by a depressing operation of a clutch pedal by an operator but also by an operation of an actuator. A clutch system, which is disclosed in JP2017-101735A, is an example of a system having such an arrangement. In the clutch system (connecting/disconnecting device) disclosed in the Japanese Patent Application Publication, a manual operation mode and an automatic operation mode are selectively established, wherein the manual operation mode is a mode in which a connecting/disconnecting mechanism is engaged and released by the depressing operation of the clutch pedal, and the automatic operation mode is a mode in which the connecting/disconnecting mechanism is engaged and released by the operation of the actuator. Further, the Japanese Patent Application Publication discloses a provision of a simulated reaction-force generator that is configured, when the depressing operation of the clutch pedal is made in the automatic operation mode, to generate a simulated reaction force (pseudo reaction force) that acts as a pedal reaction force against the clutch pedal. There is proposed a force generator, as such a simulated reaction-force generator, which is configured to generate the simulated reaction force, for example, by using an elastic force of a spring.

### SUMMARY OF THE INVENTION

The simulated reaction force is generated by the spring in the system disclosed in the Japanese Patent Application Publication. However, in this arrangement, a magnitude of the simulated reaction force is adjusted only by selection of the spring, so that it is difficult to adjust the pedal reaction force to an appropriate force value that is dependent on an operated amount (depressed amount) of the clutch pedal. Therefore, there is a risk that, when the clutch pedal is depressed by the operator, an operation feeling could be made worse and an uncomfortable feeling could be given to the operator.

The present invention was made in view of the background art described above. It is therefore an object of the present invention to provide a construction capable of appropriately adjusting a pedal reaction force that is generated when a clutch pedal is operated by an operator, in a connecting/disconnecting mechanism that is to be engaged and released by a depressing operation of the clutch pedal and an operation of an actuator.

The object indicated above is achieved according to the following aspects of the present invention.

According to a first aspect of the invention, there is provided a clutch engaging/releasing device for engaging and releasing a clutch. The clutch engaging/releasing device includes: a clutch pedal configured, when being operated by an operator, to receive a depressing force that is applied by the operator; a clutch cylinder to which the depressing force is to be transmitted from the clutch pedal; a force transmitting mechanism configured to transmit the depressing force from the clutch pedal to the clutch cylinder; and an actuator which is connected to the force transmitting mechanism and which is configured to actuate the clutch cylinder through the force transmitting mechanism, wherein the force transmitting mechanism is provided with a separating mechanism configured to separate a force transmitting path between the clutch pedal and the clutch cylinder, wherein the separating mechanism includes: a first member which is to be moved, depending on an amount of operation of the clutch pedal by the operator, in a clutch engaging direction for engaging the clutch or in a clutch releasing direction for releasing the clutch; a second member which is to be moved together with the first member in the clutch releasing direction when the depressing force is transmitted from the clutch pedal to the second member through the first member, and which is to be moved in the clutch engaging direction or in the clutch releasing direction by operation of the actuator; and a reaction-force generating mechanism configured to generate a pedal reaction force which corresponds to the amount of the operation of the clutch pedal and which acts against the clutch pedal, when the first member is moved toward the second member by the operation of the clutch pedal after the first and second members have been separated from each other, and wherein the reaction-force generating mechanism includes: a pressing member which is forced toward the first and second members; and an inclined surface which is provided for converting a load applied to the inclined surface from the pressing member, into the pedal reaction force. It is noted that the term "inclined surface" should be interpreted to mean not only an inclined surface that is always inclined but also an inclined surface that is inclined, for example, at least when the first and second members are separated from each other. It is also noted that the term "inclined surface" should be interpreted to mean not only an inclined surface by which the load applied thereto from the pressing member is converted directly into the pedal reaction force but also an inclined surface that is indispensable to convert the applied load to a converted force and then generate the pedal reaction force based on the converted force. That is, the claimed invention encompasses an arrangement in which, for example, the load applied from the pressing member is converted by the inclined surface into the converted force and then a reaction force acting against the converted force is generated to act as the pedal reaction force. Further, according to an example of the first aspect of the invention, the pressing member is supported by a pressing-member supporting member, and is opposed to the first and second members in an opposed direction, wherein the reaction-force generating mechanism further includes a cam follower connected at an end portion thereof to the first member and pivotable relative to the first member about the end portion thereof, wherein the pressing member is in contact with a contact surface of the cam follower, and is forced in a direction perpendicular to the clutch engaging and releasing directions, wherein the inclined surface is constituted by the contact surface of the cam follower, wherein, when the first and second members are separated from each other, the cam follower is to be in contact at another end portion thereof with a cam profile surface of the second member, with the contact surface of the cam follower being inclined with respect to a direction parallel to the clutch engaging and releasing directions such that a distance between the contact surface of the cam follower and the pressing-member supporting member in the opposed direction is increased in the clutch releasing direction, and wherein, when the first member is moved toward the second member by the operation of the clutch pedal, the contact surface converts the load into, as the pedal reaction force, a converted force that forces the first member in the clutch engaging direction. Further, according to another example of the first aspect of the invention, the pressing member is supported by a pressing-member supporting member, and is opposed to the first and second members in an opposed direction, wherein the inclined surface is provided in the first member or a connected member connected to the first member, and is inclined with respect to a direction parallel to the clutch engaging and releasing directions such that a distance between the inclined surface and the pressing-member supporting member in the opposed direction is increased in the clutch releasing direction, and wherein, when the first member is moved toward the second member by the operation of the clutch pedal after the first and second members have been separated from each other, the pressing member is in contact with the inclined surface, and the inclined surface converts the load into, as the pedal reaction force, a converted force that forces the first member in the clutch engaging direction.

According to a second aspect of the invention, in the clutch engaging/releasing device according to the first aspect of the invention, the pressing member is supported by a pressing-member supporting member, and is opposed to the first and second members in an opposed direction, wherein the inclined surface is provided in the first member, and is inclined with respect to a direction parallel to the clutch engaging and releasing directions such that a distance between the inclined surface and the pressing-member supporting member in the opposed direction is increased in the clutch releasing direction, and wherein, when the first member is moved toward the second member by the operation of the clutch pedal after the first and second members have been separated from each other, the pressing member is in contact with the inclined surface, and the inclined surface converts the load into, as the pedal reaction force, a converted force that forces the first member in the clutch engaging direction.

According to a third aspect of the invention, in the clutch engaging/releasing device according to the first aspect of the invention, the pressing member is supported by a pressing-member supporting member, and is opposed to the first and second members in an opposed direction, wherein the reaction-force generating mechanism further includes a cam follower connected at an end portion thereof to the first member and pivotable relative to the first member about the end portion thereof, wherein the pressing member is in contact with a contact surface of the cam follower, and is forced in a direction perpendicular to the clutch engaging and releasing directions, wherein the inclined surface is provided in the second member, and is inclined with respect to a direction parallel to the clutch engaging and releasing directions such that a distance between the inclined surface and the pressing-member supporting member in the opposed direction is increased in the clutch engaging direction, wherein the cam follower is to be in contact at another end portion thereof with the inclined surface, and wherein the contact surface of the cam follower with which the pressing member is in contact is made parallel to the clutch engaging and releasing directions when the first and second members are adjacent to each other. For example, when the first member is moved toward the second member by the operation of the clutch pedal after the first and second members have been separated from each other, the cam follower is in contact at the another end portion thereof with the inclined surface, and the inclined surface converts the load applied to the inclined surface from the pressing member through the cam follower, into a converted force that forces the second member in the clutch releasing direction, such that a reaction force acting against the converted force is transmitted to the first member through the cam follower, and forces the first member in the clutch engaging direction so as to act as the pedal reaction force.

According to a fourth aspect of the invention, in the clutch engaging/releasing device according to the first aspect of the invention, the inclined surface is provided in the first member, wherein the pressing member is supported by a pressing-member supporting member, and is opposed to the first and second members in an opposed direction, wherein the reaction-force generating mechanism further includes a cam follower connected at an end portion thereof to the first member and pivotable relative to the first member about the end portion thereof, wherein the cam follower is forced to be constantly held in contact with the pressing member, wherein the pressing member is in contact with a contact surface of the cam follower, and is forced in a direction perpendicular to the clutch engaging and releasing directions, wherein the pressing member is in contact with the inclined surface when the first member is moved toward the second member by the operation of the clutch pedal after the first and second members have been separated from each other, wherein the inclined surface is inclined with respect to a direction parallel to the clutch engaging and releasing directions such that a distance between the inclined surface and the pressing-member supporting member in the opposed direction is increased in the clutch releasing direction, and wherein the contact surface of the cam follower with which the pressing member is in contact is made parallel to the clutch engaging and releasing directions when the first and second members are adjacent to each other.

According to a fifth aspect of the invention, in the clutch engaging/releasing device according to any one of the first through fourth aspects of the invention, the reaction-force generating mechanism further includes a spring mechanism which is connected to the pressing member and which forces the pressing member in a direction toward the first and second members.

According to a sixth aspect of the invention, in the clutch engaging/releasing device according to the fifth aspect of the invention, the pressing member is a cam roller, wherein the cam roller is to be rotated when a member that is in contact with the cam roller is moved in the clutch engaging direction or in the clutch releasing direction.

According to a seventh aspect of the invention, in the clutch engaging/releasing device according to the third or fourth aspect of the invention, the second member has a recess in a surface thereof that is opposed to the pressing-member supporting member in the opposed direction, wherein the cam follower is in contact at the other end portion with the recess when the first and second members are adjacent to each other.

According to an eighth aspect of the invention, in the clutch engaging/releasing device according to the first aspect of the invention, the second member is located on a front side of the first member in the clutch releasing direction, wherein the first and second members are in contact with each other when the first and second members are adjacent to each other.

In the clutch engaging/releasing device according to the first aspect of the invention, in a transient stage in which the first member is moved, by the operation of the clutch pedal, toward the second member after the first and second members have been separated from each other, it is possible to generate the pedal reaction force that corresponds to the operating amount of the clutch pedal, owing to provision of the reaction-force generating mechanism. Specifically, since the reaction-force generating mechanism includes the inclined surface that is provided for converting the load applied from the pressing member, into the pedal reaction force in the transient stage, it is possible to convert the load into the pedal reaction force whose magnitude is suitably dependent on the operating amount of the clutch pedal, by adjusting a shape of the inclined surface, thereby making it possible to improve an operation feeling given to the operator when the operator depresses the clutch pedal.

In the clutch engaging/releasing device according to the second aspect of the invention, in the transient stage in which the first member is moved toward the second member by the operation of the clutch pedal, the pressing member is brought into contact with the inclined surface of the first member, and the inclined surface converts the load applied from the pressing member, into, as the pedal reaction force, the converted force that forces the first member in the clutch engaging direction. That is, the load is converted into the converted force as the pedal reaction, depending on a shape of the inclined surface with which the pressing member is in contact, so that it is possible to generate the pedal reaction force whose magnitude is suitably dependent on the operating amount of the clutch pedal, by appropriately adjusting the shape of the inclined surface.

In the clutch engaging/releasing device according to the third aspect of the invention, in the transient stage in which the first member is moved toward the second member by the operation of the clutch pedal, the other end portion of the cam follower forced by the pressing member is brought into contact with the inclined surface, and the load applied from the pressing member is converted into the pedal reaction force acting in the clutch engaging direction, depending on the shape of the inclined surface with which the other end portion of the cam follower is in contact. The pedal reaction force is transmitted to the first member through the cam follower. It is possible to generate the pedal reaction force whose magnitude is suitably dependent on the operating amount of the clutch pedal, by appropriately adjusting the shape of the inclined surface. Further, when the first and second members are adjacent to each other, the contact surface of the cam follower with which the pressing member is in contact is made parallel to the clutch engaging and releasing directions in which the first and second members are movable. Therefore, in a transient stage in which the first and second members are moved together with each other in clutch engaging direction, after the clutch pedal has been released, it is possible to reduce a reaction force generated based on the load applied from the pressing member and acting in the direction perpendicular to the clutch engaging and releasing directions in which the first and second members are movable.

In the clutch engaging/releasing device according to the fourth aspect of the invention, in the transient stage in which the first member is moved toward the second member by the operation of the clutch pedal, the pressing member is brought into contact with the inclined surface of the first member, and the inclined surface converts the load applied from the pressing member, into, as the pedal reaction force, the converted force that forces the first member in the clutch engaging direction. That is, the load is converted into the converted force as the pedal reaction, depending on a shape of the inclined surface with which the pressing member is in contact, so that it is possible to generate the pedal reaction force whose magnitude is suitably dependent on the operating amount of the clutch pedal, by appropriately adjusting the shape of the inclined surface. Further, when the first and second members are adjacent to each other, the contact surface of the cam follower with which the pressing member is in contact is made parallel to the clutch engaging and releasing directions in which the first and second members are movable. Therefore, in a transient stage in which the first and second members are moved together with each other in clutch engaging direction, after the clutch pedal has been released, it is possible to reduce a reaction force generated based on the load applied from the pressing member and acting in the direction perpendicular to the clutch engaging and releasing directions in which the first and second members are movable.

In the clutch engaging/releasing device according to the fifth aspect of the invention, owing to a biasing force of the spring mechanism, it is possible to apply, to the pressing member, the load that is to be converted into the pedal reaction force whose magnitude is dependent on the operating amount of the clutch pedal.

In the clutch engaging/releasing device according to the sixth aspect of the invention, in the transient stage in which the first and second members are moved together with each other in the clutch engaging direction after the clutch pedal has been released, the cam roller is rotated so that it is possible to reduce a reaction force generated due to the load applied from the pressing member in this transient stage.

In the clutch engaging/releasing device according to the seventh aspect of the invention, the second member is provided with the recess with which the cam follower is in contact at the other end portion when the first and second members are adjacent to each other. Therefore, the contact surface of the cam follower with which the pressing member is in contact can be made parallel to the clutch engaging and releasing directions (in which the first and second members are movable) when the first and second members are adjacent to each other, by adjusting a position of the recess.

In the clutch engaging/releasing device according to the eight aspect of the invention, when the first and second members are adjacent to each other, the separating mechanism is placed in its connecting state with the first and second members being in contact with each other. On the other hand, when the first and second members are separated from each other, the separating mechanism are placed in its separating state.

### BRIEF DESCRIPTION OF THE DRAWINGS

FIG. 1 is a view showing an overall construction of a clutch engaging/releasing device for engaging and releasing a clutch, to which the present invention is applied;
FIG. 2 is a set of views schematically showing a construction of a separating mechanism in an embodiment of the invention;
FIG. 3 is a set of views showing an operation state of the separating mechanism in respective stages when a clutch pedal is depressed by an operator;
FIG. 4 is a set of views showing the operation state of the separating mechanism in respective stages during a coasting run;
FIG. 5 is a set of views schematically showing a construction of a separating mechanism in another embodiment of the invention;
FIG. 6 is a view showing the operation state of the separating mechanism of FIG. 5 in a transient stage of switching from an engaged state of the clutch to the coasting run;
FIG. 7 is a view showing the operation state of the separating mechanism when the switching to the coasting run is completed after the transient stage shown in FIG. 6;
FIG. 8 is a view showing the operation state of the separating mechanism in a transient stage in which the clutch pedal is being depressed after the switching to the coasting run has been completed as shown in FIG. 7;
FIG. 9 is a view showing the operation state of the separating mechanism when a depressed amount of the clutch pedal is maximized after the clutch pedal has been depressed as shown in FIG. 8;
FIG. 10 is a view showing the operation state of the separating mechanism in a transient stage in when the clutch pedal is being released after the depressed amount of the clutch pedal has been maximized as shown in FIG. 9;
FIG. 11 is a set of views schematically showing a construction of a separating mechanism in still another embodiment of the invention;
FIG. 12 is a view showing the operation state of the separating mechanism of FIG. 11 in a transient stage of switching from the engaged state of the clutch to the coasting run;
FIG. 13 is a view showing the operation state of the separating mechanism when the switching to the coasting run is completed after the transient stage shown in FIG. 12;
FIG. 14 is a view showing the operation state of the separating mechanism in a transient stage in which the clutch pedal is being depressed after the switching to the coasting run has been completed as shown in FIG. 13; and
FIG. 15 is a view showing the operation state of the separating mechanism when a depressed amount of the clutch pedal is maximized after the clutch pedal has been depressed as shown in FIG. 14.

### DETAILED DESCRIPTION OF PREFERRED EMBODIMENTS

Hereinafter, preferred embodiments of the invention will be described in detail with reference to the accompanying drawings. The figures of the drawings are simplified or deformed as needed, and each portion is not necessarily precisely depicted in terms of dimension ratio, shape, etc.

### FIRST EMBODIMENT

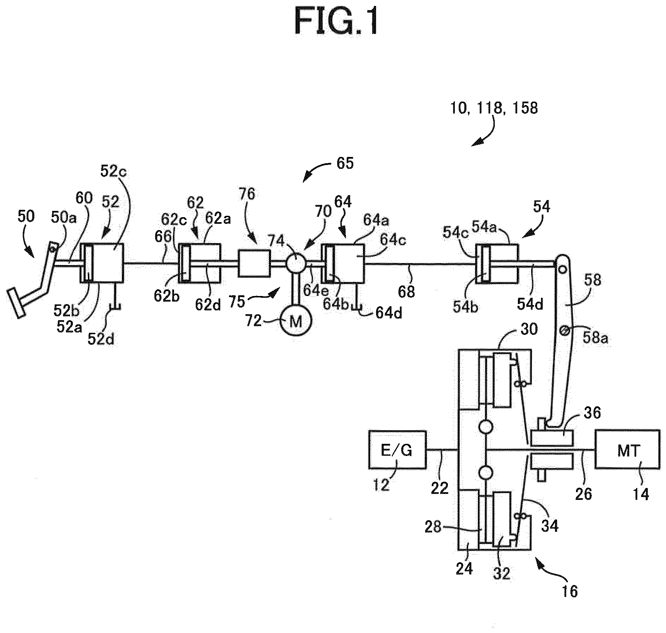

FIG. 1 is a view showing an overall construction of a clutch engaging/releasing device 10 to which the present invention is applied. The engaging/releasing device 10 is provided in a drive-force transmitting path between an engine 12 and a manual transmission 14, and is configured to engage and release a clutch 16.

The engine 12 is a drive force source configured to generate a drive force by which a vehicle is enabled to run. For example, the engine 12 may be an internal combustion engine such as a gasoline engine and a diesel engine, which is configured to generate the drive force by combustion of fuel injected into cylinders. The manual transmission 14 is provided in a drive-force transmitting path between the engine 12 and drive wheels of the vehicle, and may be constituted, for example, by a well-known two parallel shaft transmission.

The clutch 16 is placed in an engaged state when a clutch pedal 50 is not operated, namely, when the clutch pedal 50 is not depressed. When the clutch 16 is placed in the engaged state, there is established a drive-force transmitting state in which the engine 12 and the manual transmission 14 are connected to each other in a drive-force transmittable manner. On the other hand, when the clutch pedal 50 is depressed, the clutch 16 is placed into a slipping state or a released state. Further, an operation state of the clutch 16 can be switched to the slipping state or the released state also by operation of an electric motor 72 that is described below.

The clutch 16 includes a flywheel 24 attached to an output shaft 22 of the engine 12; a clutch disk 28 attached to a transmission input shaft 26 of the manual transmission 14; a clutch cover 30 connected to the flywheel 24; a pressure plate 32 disposed inside the clutch cover 30; a diaphragm spring 34 configured to generate a biasing force for pressing the clutch disk 28 against the flywheel 24; and a release bearing 36 disposed radially outside the transmission input shaft 26 and axially movable relative to the transmission input shaft 26.

When the clutch 16 is in the engaged state, the pressure plate 32 and the clutch disk 28 are pressed by the diaphragm spring 34 against the flywheel 24 such that the flywheel 24 and clutch disk 28 are in close contact with each other. From this state in which the clutch 16 is in the engaged state, when the release bearing 36 is axially moved toward the engine 12 whereby a radially inner portion of the diaphragm spring 34 is pressed by the release bearing 36, the diaphragm spring 34 is deformed to reduce the biasing force by which the clutch disk 28 is pressed against the flywheel 24. With the reduction of the biasing force generated by the diaphragm spring 34, the clutch 16 is placed into the slipping state. Further, when the release bearing 36 is further moved to a given position, the biasing force by which the clutch disk 28 is pressed against the flywheel 24 is zeroed whereby the clutch disk 28 is separated from the flywheel 24. In this instance, the clutch 26 is placed into the released state.

The engaging/releasing device 10 is provided to engage and release the clutch 16. The engaging/releasing device 10 includes: the above-described clutch pedal 50 that is to be operated by the operator; a clutch master cylinder 52 configured to convert a depressing force applied to the clutch pedal 50 by the operator, into a hydraulic pressure; a clutch release cylinder 54 to which the depressing force applied to the clutch pedal 50 is to be transmitted; first and second cylinders 62, 64 that are disposed in series between the master cylinder 52 and the release cylinder 54; and a release fork 58 configured to move the release bearing 36 by a distance corresponding to an amount of operation of the release cylinder 54. The first and second cylinders 62, 64 cooperate to each other to constitute a force transmitting mechanism 65 which is provided in a force transmitting path between the clutch pedal 50 and the release cylinder 54 and which is configured to transmit the depressing force applied to the clutch pedal 50, to the release cylinder 54. It is noted that the release cylinder 54 corresponds to "clutch cylinder" recited in the appended claims.

When being depressed by the operator, the clutch pedal 50 is pivoted about a pivot axis 50a. The clutch pedal 50 and the master cylinder 52 are mechanically connected to each other through a connecting rod 60.

The master cylinder 52 includes: a cylindrical-tubular-shaped cylinder body 52a; a disk-shaped piston 52b disposed to be slidable inside the cylinder body 52a; a hydraulic chamber 52c which is defined by cooperation of the cylinder body 52a and the piston 52b and which is filled with a working fluid (oil); and a reservoir tank 52d that stores the working fluid. The piston 52b and the clutch pedal 50 are connected to each other through the connecting rod 60. When the clutch pedal 50 is depressed, the piston 52b is moved within the cylinder body 52a by a distance corresponding to a depressed amount of the clutch pedal 50. In this instance, in the hydraulic chamber 52c, a hydraulic pressure corresponding to the depressing force applied to the clutch pedal 50 is generated.

The release cylinder 54 includes: a cylindrical-tubular-shaped cylinder body 54a; a disk-shaped piston 54b disposed to be slidable inside the cylinder body 54a; a hydraulic chamber 54c which is defined by cooperation of the cylinder body 54a and the piston 54b and which is filled with the working fluid (oil); and a rod 54d connected to the piston 54b. The piston 54b is connected to the rod 54d that is in contact at its distal end portion with an end portion of the release fork 58 having an elongated shape. The release fork 58, which is pivotable about a pivot axis 58a, is in contact at one of its longitudinally opposite end portions with the distal end portion of the rod 54d and at the other of its longitudinally opposite end portions with a flange portion of the release bearing 36. Thus, when the piston 54b of the release cylinder 54 is moved, by the hydraulic pressure of the working fluid in the hydraulic chamber 54c, within the cylinder body 54a in rightward direction as seen in FIG. 1, the rod 54d is moved together with the piston 54b in the rightward direction, whereby the above-described one of the longitudinally opposite end portions of the release fork 58 is forced by the rod 54d in the rightward direction, and accordingly the release fork 58 is pivoted about the pivot axis 58a in clockwise direction as seen in FIG. 1. With the release fork 58 being pivoted in the clockwise direction, the other of the longitudinally opposite end portions of the release fork 58 is displaced in leftward direction as seen in FIG. 1 thereby moving the releasing bearing 36, which is in contact with the other of the longitudinally opposite end portions of the release fork 58, in the leftward direction.

The first cylinder 62 includes: a cylindrical-tubular-shaped cylinder body 62a; a disk-shaped piston 62b disposed to be slidable inside the cylinder body 62a; a hydraulic chamber 62c which is defined by cooperation of the cylinder body 62a and the piston 62b and which is filled with the working fluid (oil); and a rod 62d connected to the piston 62b. The second cylinder 64 includes: a cylindrical-tubular-shaped cylinder body 64a; a disk-shaped piston 64b disposed to be slidable inside the cylinder body 64a; a hydraulic chamber 64c which is defined by cooperation of the cylinder body 64a and the piston 64b and which is filled with the working fluid (oil); a reservoir tank 64d; and a rod 64e connected to the piston 64b.

The hydraulic chamber 52c of the master cylinder 52 and the hydraulic chamber 62c of the first cylinder 62 are connected to each other through a first fluid passage 66, so that the hydraulic pressure generated in the master cylinder 52 is transmitted to the hydraulic chamber 62c of the first cylinder 62 through the first fluid passage 66. Further, the piston 62b of the first cylinder 62 is pressed by the transmitted hydraulic pressure and is moved within the cylinder body 62a in rightward direction as seen in FIG. 1.

The hydraulic chamber 64c of the second cylinder 64 and the hydraulic chamber 54c of the release cylinder 54 are connected to each other through a second fluid passage 68, so that the hydraulic pressure generated in the hydraulic chamber 64c of the second cylinder 64 is transmitted to the hydraulic chamber 54c of the release cylinder 54 through the second fluid passage 68. Further, the piston 54b of the release cylinder 54 is pressed by the transmitted hydraulic pressure and is moved within the cylinder body 54a in rightward direction as seen in FIG. 1.

To the rod 64e of the second cylinder 64, the electric motor 72 is connected through a speed reducer 74 in a force transmittable manner. The speed reducer 74 is a mechanism which is constituted by, for example, a ball screw, and which is configured to convert a rotary motion of the electric motor 72 into a translational motion of the rod 64e in its axial direction. Thus, with rotation of the electric motor 72, a force is applied to the rod 64e to force the rod 64e to be moved in the axial direction so that the rod 64e is axially moved to a position that is dependent on a rotational position of the electric motor 72. The electric motor 72 and the speed reducer 74 cooperate to constitute an actuator 75. The actuator 75 is connected to the second cylinder 64 that is a part of force transmitting mechanism 65, in a force transmittable manner, and is accordingly capable of transmitting a force to the release cylinder 54 through the second cylinder 64.

In the engaging/releasing device 10, when the clutch pedal 50 is depressed, the hydraulic pressure is generated in the hydraulic chamber 52c of the master cylinder 52 such that a value of the generated hydraulic pressure corresponds to a magnitude of the depressing force applied to the clutch pedal 50. With the generated hydraulic pressure being transmitted to the hydraulic chamber 62c of the first cylinder 62 through the first fluid passage 66, the piston 62b and the rod 62d of the first cylinder 62 are moved toward the release cylinder 54, i.e., in the rightward direction as seen in FIG. 1. With the rod 62d being moved in the rightward direction, the rod 64e and the piston 64b of the second cylinder 64 are moved toward the release cylinder 54, i.e., in the rightward direction as seen in FIG. 1, through a separating mechanism 76 that is described below. By the movement of the piston 64b in the rightward direction, the hydraulic pressure is generated in the hydraulic chamber 64c, and the generated hydraulic pressure is transmitted to the hydraulic chamber 54c of the release cylinder 54 through the second fluid passage 68. Owing to the hydraulic pressure transmitted to the hydraulic chamber 54c, the piston 54b and the rod 54d of the release cylinder 54 are moved in the rightward direction as seen in FIG. 1, i.e., in a direction for pressing the one of the longitudinally opposite end portions of the release fork 58. Thus, the release fork 58 is pivoted whereby the release bearing 36 (that is in contact with the other of the longitudinally opposite end portions of the release fork 58) is moved toward the clutch 16, so that the operation state of the clutch 16 is switched to the slipping state or to the released state. Further, when the clutch pedal 50 is released, the engaging/releasing device 10 is placed back to a pre-depression state before depression of the clutch pedal 50, by a restoring force which is provided by the diaphragm spring 34 of the clutch 16 and which causes the engaging/releasing device 10 to be placed back to the pre-depression state. Further, when the actuator 75 transmits, to the rod 64e and the piston 64b of the second cylinder 64, a force by which the clutch 16 is to be released, the rod 64e and the piston 64b of the second cylinder 64 are moved toward the release cylinder 54, i.e., in the rightward direction as seen in FIG. 1. Thus, by the force transmitted from the actuator 75, too, the operation state of the clutch 16 is switched to the slipping state or to the released state, because the second cylinder 64, release cylinder 54, release fork 58 and release bearing 36 are actuated substantially in the same way as when the clutch pedal 50 is depressed.

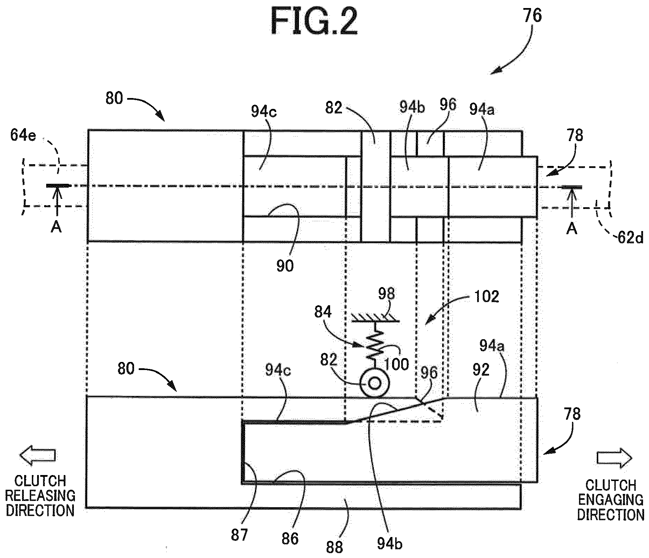

In the force transmitting mechanism 65, the separating mechanism 76 is provided between the rod 62d of the first cylinder 62 and the rod 64e of the second cylinder 64, to separate the force transmitting path between the clutch pedal 50 and the clutch cylinder 54. FIG. 2 is a set of views schematically showing a construction of the separating mechanism 76 that is shown also in FIG. 1. The view in an upper portion of FIG. 2 is an upper plan view of the separating mechanism 76 as seen from an upper side of a cam roller 82 that is described later. The view in a lower portion of FIG. 2 is a cross sectional view taken in line A-A indicated in the view in the upper portion. It is noted that FIG. 2 shows an operation state of the separating mechanism 76 when the clutch pedal 50 is released whereby the clutch 16 is fully engaged.

As shown in FIG. 2, the separating mechanism 76 includes: a first member 78 connected to the rod 62d of the first cylinder 62 which is represented by broken line; a second member 80 connected to the rod 64e of the second cylinder 64 which is represented by broken line; the above-described cam roller 82 which is rotatable and which is biased or constantly forced toward the first and second members 78, 80; and a spring mechanism 84 connected to the cam roller 82 to bias or constantly force the cam roller 82 toward the first and second members 78, 80.

The first and second members 78, 80 are disposed in series in this order of description in a direction away the clutch pedal 50 toward the release cylinder 54. When the first and second members 78, 80 are moved in a direction toward the clutch pedal 50, the clutch 16 is engaged. When the first and second members 78, 80 are moved in the direction toward the release cylinder 54, the clutch 16 is released. In the following description, the direction away from the release cylinder 54 toward the clutch pedal 50 will be referred to as "a clutch engaging direction" that is recited also in the appended claims, while the direction away from the clutch pedal 50 toward the release cylinder 54 will be referred to as "a clutch releasing direction" that is recited also in the appended claims. Thus, the first member 78 is located on a front side of the second member 80 in the clutch engaging direction, and the second member 80 is located on a front side of the first member 78 in the clutch releasing direction.

Each of the first and second members 78, 80 is a cylindrical member having a generally circular cross sectional shape. The first and second members 78, 80 are arranged such that a longitudinal direction of each of the first and second members 78, 80 is parallel to the clutch engaging and releasing directions in which the first and second members 78, 80 are movable. The first member 78 is partially fitted in a fitting hole 86 of the second member 80. More precisely, the first member 78 has an axial end portion which is opposed to the second member 80 and which is fitted in the fitting hole 86 provided in an axial end portion of the second member 80 that is opposed to the first member 78. In a state in which the first and second members 78, 80 are located in respective positions adjacent to each other, as shown in FIG. 2, an axially distal end of the first member 78 is in contact with a bottom surface 87 of the fitting hole 86 of the second member 80.

The fitting hole 86, which is provided in the axial end portion of the second member 80 to extend in a direction parallel to the clutch engaging and releasing directions, is surrounded by a cylindrical-shaped tubular portion 88 that is located in the axial end portion of the second member 80. A flat surface portion is provided in an outer circumferential surface of the tubular portion 88, and is opposed to the cam roller 82 in a radial direction of the second member 80, namely, is aligned with the cam roller 82 in a circumferential direction of the second member 80, such that the cam roller 82 can be brought into contact with the flat surface portion. Further, a cutout 90 is provided in the tubular portion 88, and is opposed to the cam roller 82 in the radial direction, namely, is aligned with the cam roller 82 in the circumferential direction. The cutout 90 opens in a part of an opposed portion of the tubular portion 88 opposed to the cam roller 82 in the radial direction (or in a part of an aligned portion of the tubular portion 88 aligned with the cam roller 82 in the circumferential direction), and extends to an axial end of the second member 80 in the axial direction.

The first member 78 is provided with a protrusion 92 which protrudes toward the cam roller 82 and is fitted in the cutout 90 of the second member 80. With the protrusion 92 of the first member 78 being fitted in the cutout 90 of the second member 80, the first and second members 78, 80 are inhibited from being rotated relative to each other, and are allowed to be moved relative to each other in the clutch engaging and releasing directions in which the first and second members 78, 80 are movable.

The first member 78 is connected through the first cylinder 62 and the master cylinder 52 to the clutch pedal 50 in a force transmittable manner. Therefore, the first member 78 is movable by a distance corresponding to an operating amount (depressed amount) of the clutch pedal 50 in the clutch engaging direction (i.e., a direction for engaging the clutch 16) and in the clutch releasing direction (i.e., a direction for releasing the clutch 16). For example, the first member 78 is moved in the clutch engaging direction when the clutch pedal 50 is released, and is moved in the clutch releasing direction when the clutch pedal 50 is depressed.

A flat surface portion is provided in an outer circumferential surface of the first member 78, and is opposed to the cam roller 82 in a radial direction of the first member 78, namely, is aligned with the cam roller 82 in a circumferential direction of the first member 78, such that the cam roller 82 can be brought into contact with the flat surface portion. When the first member 78 is moved with the cam roller 82 being in contact with the flat surface portion of the first member 78, the cam roller 82 is rotated while being in contact with the flat surface portion of the first member 78. The flat surface portion of the first member 78, which is to be in contact with the cam roller 82, includes three surfaces consisting of a first contact surface 94a, a second contact surface 94b and a third contact surface 94c (see FIG. 2). The first and second contact surfaces 94a, 94b are provided in the protrusion 92 of the first member 78.

Among the first through third contact surfaces 94a, 94b, 94c, the first contact surface 94a is located to be closer than the second and third contact surfaces 94b, 94c, to the spring mechanism 84 connected to the cam roller 82, in an opposed direction in which the first member 78 and the spring mechanism 84 are opposed to each other, and the third contact surface 94c is located to be farther than the first and second contact surfaces 94a, 94b, from the spring mechanism 84 in the opposed direction. That is, among the first through third contact surfaces 94a, 94b, 94c, the first contact surface 94a is located higher than the second and third contact surfaces 94b, 94c, and the third contact surface 94c is located lower than the first and second contact surfaces 94a, 94b, as seen in the view in the lower portion of FIG. 2 in which the spring mechanism 84 is located on an upper side of the first and second members 78, 80. The second contact surface 94b interconnects between the first and third contact surfaces 94a, 94c, and is inclined with respect to a direction parallel to the clutch engaging and releasing directions such that a distance between the second contact surface 94b and the spring mechanism 84 in the above-described opposed direction is gradually increased in the clutch releasing direction, i.e., in leftward direction as seen in FIG. 2.

The second member 80 is connected through the second cylinder 64 to the release cylinder 54 in a force transmittable manner. In a state in which the clutch pedal 50 is released, the second member 80 is positioned in a rear end in the clutch engaging direction, owing to the reaction force (i.e. restoring force) transmitted from the diaphragm spring 34 of the clutch 16. When the clutch pedal 50 is depressed, the second member 80 is forced by the first member 78 in the clutch releasing direction, and is moved together with the first member 78 in the clutch releasing direction.

The second member 80 is connected through the second cylinder 64 also to the actuator 75 in a force transmittable manner. Specifically, the electric motor 72 is connected to the rod 64e of the second cylinder 64 through the speed reducer 74 in a drive-force transmittable manner. Therefore, with the force of the electric motor 72 being transmitted to the second member 80, the second member 80 is movable in the clutch engaging and releasing directions.

As described above, a contact portion of the tubular portion 88 of the second member 80, with which the cam roller 82 is to be brought into contact, is constituted by the flat surface portion. When the second member 80 is moved with the cam roller 82 being in contact with the flat surface portion of the second member 80, the cam roller 82 is rotated while being in contact with the flat surface portion of the second member 80. The flat surface portion of the second member 80, with which the cam roller 82 is to be in contact, is provided with an inclined surface 96 that is located in its distal end portion. The inclined surface 96 is inclined with respect to the direction parallel to the clutch engaging and releasing directions such that a distance between the inclined surface 96 and the spring mechanism 84 in the above-described opposed direction is gradually increased in the clutch engaging direction, i.e., in rightward direction as seen in FIG. 2.

The cam roller 82, which is rotatable about its rotation axis, is disposed relative to the first and second members 78, 80 such that the rotation axis is perpendicular to the clutch engaging and releasing directions in which the first and second members 78, 80 are movable, so that the cam roller 82 is rotated when one of the first and second members 78, 80, with which the cam roller 82 is in contact, is moved in the clutch engaging and releasing directions. The cam roller 82 is connected to the spring mechanism 84, so as to be biased or constantly forced toward the first and second members 78, 80 by the spring mechanism 84. Specifically, the cam roller 82 is constantly forced in a direction perpendicular to the clutch engaging and releasing directions in which the first and second members 78, 80 are movable, namely, in downward direction as seen in the view in the lower portion of FIG. 2. Thus, the cam roller 82 is constantly held in contact with one of the first and second members 78, 80.

The spring mechanism 84 includes: a fixing member 98 that corresponds to "pressing-member supporting member" recited in the appended claims; and a spring 100 that is connected at one of its opposite end portions to the fixing member 98 and is connected at the other of its opposite end portions to the cam roller 82. The spring 100 constantly forces the cam roller 82 in the direction perpendicular to the clutch engaging and releasing directions in which the first and second members 78, 80 are movable. Therefore, the cam roller 82 presses one of the first and second members 78, 80 with which the cam roller 82 is in contact, in the direction perpendicular to the clutch engaging and releasing directions.

Owing to provision of the separating mechanism 76, it is possible to release the clutch 16 even without movement of the clutch pedal 50, when the second member 80 is moved by operation of the electric motor 72 in the clutch releasing direction in a state in which the clutch pedal 50 is not depressed. This operation of the electric motor 72 is made, for example, in an inertia running of the vehicle. In the inertia running, with the clutch 16 being released, an inertia running distance can be increased by eliminating a running resistance such as dragging of the engine 12 during the running of the vehicle. In the following description, a run of the vehicle with the clutch 16 being released by operation of the electric motor 72 in the inertia running will be referred to as a coasting run. During the coasting run, the first and second members 78, 80 are separated from each other in the separating mechanism 76 so that the first member 78 is prevented from being moved together with the second member 80 in the clutch engaging direction. It is therefore possible to avoid the clutch pedal 50 from being pivoted in response to the operation of the electric motor 72 and accordingly to prevent an uncomfortable feeling from being given to the operator.

On the other hand, there could be a case in which the clutch pedal 50 is depressed by the operator during the coasting run. In this case, in a transient stage in which the clutch pedal 50 is being depressed during the coasting run, the pedal reaction force applied from the clutch 16 not transmitted because the force transmission between the clutch pedal 50 and the release cylinder 54 is cut off by the separating mechanism 76. Therefore, there is a risk that an uncomfortable feeling would be given to the operator because an operation feeling given to the operator when the operator depresses the clutch pedal 50 in this case is different from an operation feeling given to the operator when the operator depresses the clutch pedal 50 during a normal run of the vehicle that is other than the coasting run.

In the present embodiment, the separating mechanism 76 is provided with a reaction-force generating mechanism 102 that is configured, in the transient stage in which the clutch pedal 50 is being depressed by the operator during the coasting run, to generate, in a simulated manner, a pedal reaction force whose magnitude corresponds to the operating amount of the clutch pedal 50. The reaction-force generating mechanism 102 is constituted mainly by the above-described spring mechanism 84, the above-described cam roller 82 that is constantly forced toward the first and second members 78, 80 by the spring mechanism 84, and the above-described second contact surface 94b that is to be brought into contact with the cam roller 82 in the transient stage in which the clutch pedal 50 is being depressed by the operator during the coasting run. It is noted that the cam roller 82 corresponds to "pressing member" recited in the appended claims and that the second contact surface 94b corresponds to "inclined surface" provided for converting a load applied thereto from the recited "pressing member" into the pedal reaction force, which is also recited in the appended claims.

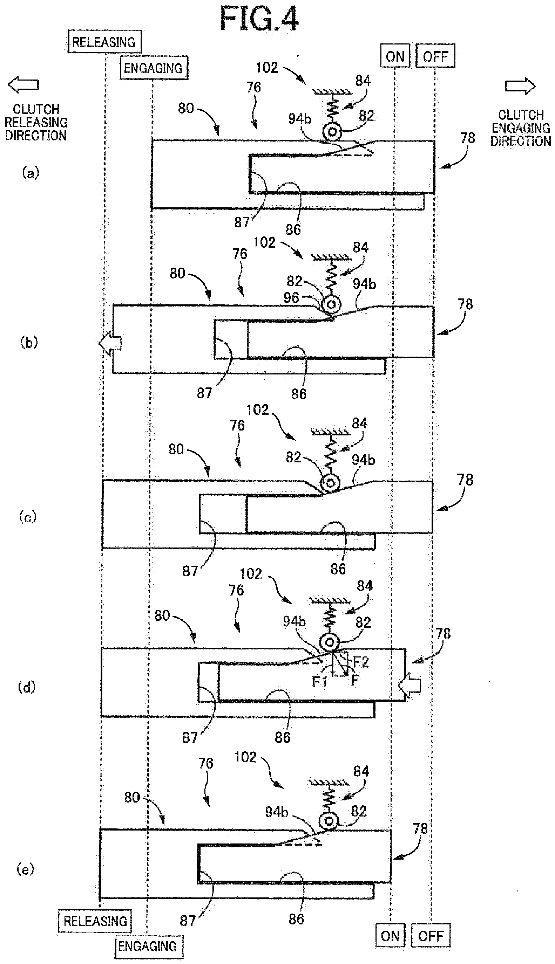

The second contact surface 94b, which is provided in the first member 78, is inclined with respect to the direction parallel to the clutch engaging and releasing directions such that a distance between the second contact surface 94b and the fixing member 98 (by which the cam roller 82 is supported) in the above-described opposed direction is gradually increased in the clutch releasing direction. The cam roller 82 is brought into contact with the second contact surface 94b in the transient stage in which the clutch pedal 50 is being depressed by the operator during the coasting run. With the cam roller 82 being in contact with the second contact surface 94b, the cam roller 82 applies, to the first member 78, a load F that acts in a direction perpendicular to the second contact surface 94b. This load F is converted, by the second contact surface 94b, into a component force F1 acting in the direction perpendicular to the clutch engaging and releasing directions and a component force F2 acting in the clutch engaging direction (see view (d) of FIG. 4). The component force F2 forces the first member 78 in the clutch engaging direction, so as to acts as the pedal reaction force against the clutch pedal 50. Further, the cam roller 82 is in contact with a portion of the second contact surface 94b, which portion is changed with change of the operating amount of the clutch pedal 50, i.e., with change of position of the first member 78, so that it is possible to adjust the pedal reaction force to a value suitable for the operating amount of the clutch pedal 50, by adjusting a shape of the second contact surface 94b appropriately depending on the operating amount of the clutch pedal 50. That is, by appropriately adjusting the shape of the second contact surface 94b, it is possible to cause the pedal reaction force to be generated in a simulated manner such that the generated pedal reaction force is not substantially different from the pedal reaction force generated when the clutch pedal 50 is depressed during the normal run. It is noted that a stiffness of the spring 100 of the spring mechanism 84, which constantly forces the cam roller 82, is set to a value that enables the pedal reaction force to be generated in a simulated manner.

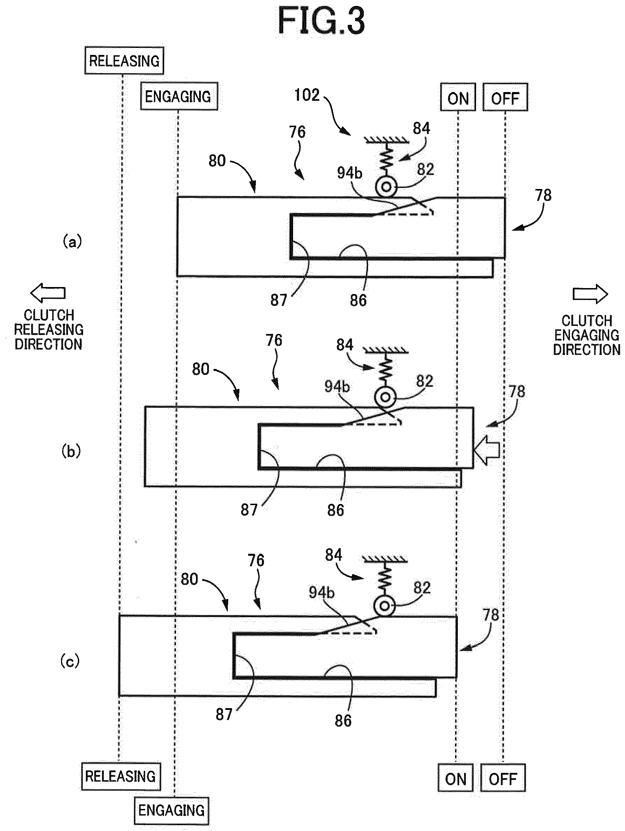

The operation of the separating mechanism 76, which is constructed as described above, will be described with reference to FIG. 3. FIG. 3 is a set of views showing an operation state of the separating mechanism 76 in respective stages (that are different from one another in terms of the operating amount, i.e., depressed amount of the clutch pedal 50) when the clutch pedal 50 is depressed by the operator during the normal run. Specifically, the view (a) of FIG. 3 shows the operation state of the separating mechanism 76 in a stage in which the clutch pedal 50 is not depressed, namely, the clutch pedal 50 is released, the view (b) of FIG. 3 shows the operation state of the separating mechanism 76 in a stage in which the clutch pedal 50 is being depressed, and the view (c) of FIG. 3 shows the operation state of the separating mechanism 76 in a stage in which the clutch pedal 50 has been depressed to a position for fully releasing the clutch 16.

When the clutch pedal 50 is depressed, the separating mechanism 76 is switched from the operation state shown in the view (a) of FIG. 3 to the operation state shown in the view (c) of FIG. 3 via the operation state shown in the view (b) of FIG. 3.

FIG 3 shows "OFF" position, "ON" position, "ENGAGING" position and "RELEASING" position. The "OFF" position (hereinafter referred to as a pedal OFF position) corresponds to a position of a front end of the first member 78 in the clutch engaging direction when the clutch pedal 50 is released. The "ON" position (hereinafter referred to as a pedal ON position) corresponds to a position of the front end of the first member 78 in the clutch engaging direction when the clutch 16 is fully released with the operating amount of the clutch pedal 50 being a maximum value that is predetermined by an appropriate design theory. The "ENGAGING" position (hereinafter referred to as a clutch engaging position) corresponds to a position of a front end of the second member 80 in the clutch releasing direction when the clutch 16 is fully engaged. The "RELEASING" position (hereinafter referred to as a clutch releasing position) corresponds to a position of the front end of the second member 80 in the clutch releasing direction when the clutch 16 is fully released.

The view (a) of FIG. 3 shows the operation state of the separating mechanism 76 in a stage when the clutch pedal 50 is released during the normal run. In this stage, the front end of the first member 78 in the clutch engaging direction is positioned in the pedal OFF position, while the front end of the second member 80 in the clutch releasing direction is positioned in the clutch engaging position, as shown in the view (a) of FIG. 3, so that the clutch 16 is placed in the engaged state. When the clutch 16 is placed in the engaged state, the cam roller 82 is in contact with the second member 80. Further, the first and second members 78, 80 are positioned in respective positions that are adjacent to each other, with a front end of the first member 78 in the clutch releasing direction being in contact with the bottom surface 87 of the fitting hole 86 of the second member 80. With the front end of the first member 78 in the clutch releasing direction being in contact with the bottom surface 87 of the fitting hole 86 of the second member 80, the separating mechanism 76 is in its connecting state.

When the clutch pedal 50 is depressed from the operation state shown in the view (a) of FIG. 3, the depressing force applied to the clutch pedal 50 is transmitted to the first member 78 whereby the first member 78 is moved in the clutch releasing direction. In this instance, since the front end of the first member 78 in the clutch releasing direction is in contact with the bottom surface 87 of the fitting hole 86 of the second member 80, the second member 80 is pressed by the first member 78 whereby the second member 80 is moved together with the first member 78 in the clutch releasing direction. In this transient stage in which the clutch pedal 50 is being depressed, the force is applied from the electric motor 72 to the second member 80 through the speed reducer 72 in synchronization with application of the depressing force to the clutch pedal 50, for thereby executing a torque assisting control so as to reduce a required magnitude of the depressing force applied to the clutch pedal 50.

The view (b) of FIG. 3 shows the operation state of the separating mechanism 76 in the transient stage when the clutch pedal 50 is being depressed. In this stage, the first and second members 78, 80 are moved in the clutch releasing direction in response to the depression of the clutch pedal 50, and the cam roller 82 starts to be in contact with the inclined surface 96 provided in the second member 80. When the first and second members 78, 80 are further moved, by further depression of the clutch pedal 50, in the clutch releasing direction from this state, the cam roller 82 presses the inclined surface 96 of the second member 80 and then presses the second contact surface 94b of the first member 78.

In this transient stage in which the cam roller 82 presses the inclined surface 96 of the second member 80 and the second contact surface 94b of the first member 78, a force is generated based on the shape of the inclined surface 96 or the second contact surface 94b which is pressed by the cam roller 82, to act against the movement of the first member 78. With the generated force being transmitted to the clutch pedal 50, the magnitude of the pedal reaction force could be changed when the operator depresses the clutch pedal 50, so that there is a risk that an uncomfortable feeling could be given to the operator. In the present embodiment, in the transient stage in which the cam roller 82 presses the inclined surface 96 of the second member 80 and the second contact surface 94b of the first member 78, a torque assisting amount of the electric motor 72 is controlled such that the force generated by the electric motor 72 acts in a direction that offsets the force acting against the movement of the first member 78. Thus, in the transient stage in which the cam roller 82 presses the inclined surface 96 of the second member 80 and the second contact surface 94b of the first member 78, it is possible to reduce the uncomfortable feeling could be given to the operator by offsetting the change of the magnitude of the pedal reaction force.

The view (c) of FIG. 3 shows the operation state of the separating mechanism 76 in a stage when the front end of the first member 78 in the clutch engaging direction has been moved to the pedal ON position and the front end of the second member 80 in the clutch releasing direction has been moved to the clutch releasing position. As shown in the view (c) of FIG. 3, the front end of the second member 80 in the clutch releasing direction has been moved to the clutch releasing position as a result of depression of the clutch pedal 50 whereby the clutch 16 is released. In this stage, the cam roller 82 is brought in contact with the first contact surface 94a of the first member 78.

FIG. 4 is a set of views showing the operation state of the separating mechanism 76 in respective stages during the coasting run.

The view (a) of FIG. 4 shows the operation state of the separating mechanism 76 in a stage before start of the coasting run, namely, in a stage in which the clutch 16 is engaged. This state shown in the view (a) of FIG. 4 is substantially the same as the state shown in the view (a) of FIG. 3, and accordingly description thereof is not provided.

The view (b) of FIG. 4 shows the operation state of the separating mechanism 76 in a transient stage in which the second member 80 is being moved in the clutch releasing direction by operation of the electric motor 72, namely, in a transient stage in which the normal run is being switched to the coasting run. As shown in the view (b) of FIG 4, the second member 80 is moved by the operation of the electric motor 72 in the clutch releasing direction whereby the first and second members 78, 80 are separated from each other so that the separating mechanism 76 separates the force transmitting path. Further, in the transient stage shown in the view (b) of FIG 4, the cam roller 82 is in contact with the inclined surface 96 provided in the second member 80.

The view (c) of FIG. 4 shows the operation state of the separating mechanism 76 in a stage in which the second member 80 has been further moved in the clutch releasing direction, from the state shown in the view (b) of FIG. 4, whereby the front end of the second member 80 in the clutch releasing direction has been moved to the clutch releasing position, namely, the switching to the coasting run has been completed. In this state, the clutch 16 is placed into the fully released state with the first and second members 78, 80 being separated from each other by a maximum distance. Further, in this state, the cam roller 82 is in contact with a portion of the second contact surface 94b of the first member 78, which is close to the third contact surface 94c.

The view (d) of FIG. 4 shows the operation state of the separating mechanism 76 in a transient stage in which the clutch pedal 50 is being depressed by the operator during the coasting run after the stage shown in the view (c) of FIG. 4. In this transient stage, the first member 78, which has been separated from the second member 80 by the maximum distance in the state shown in the view (c) of FIG. 4, is moved toward the second member 80 by depression of the clutch pedal 50.

In this transient stage in which the clutch pedal 50 is being depressed by the operator during the coasting run, there is a risk that an uncomfortable feeling would be given to the operator if the pedal reaction force, whose magnitude is substantially equal to that of the pedal reaction force generated when the clutch pedal 50 is depressed during the normal run, is not generated. In the present embodiment, in the transient stage in which the clutch pedal 50 is being depressed by the operator during the coasting run, owing to provision of the reaction-force generating mechanism 102, the load F applied to the first member 78 through the cam roller 82 that is pressed against the second contact surface 94b of the first member 78 is converted into the component force F2 that acts in the clutch engaging direction, and the component force F2 is transmitted as the pedal reaction force to the clutch pedal 50.

In the state shown in the view (d) of FIG. 4, with the cam roller 82 being in contact with the second contact surface 94b, the cam roller 82 applies, to the first member 78, the load F that acts in the direction perpendicular to the second contact surface 94b. This load F is converted, by the second contact surface 94b, into the component force F1 acting in the direction perpendicular to the clutch engaging and releasing directions and the component force F2 acting in the clutch engaging direction (see view (d) of FIG. 4). The component force F2 forces the first member 78 in the clutch engaging direction, and is transmitted to the clutch pedal 50 through the first cylinder 62 and the master cylinder 52. Thus, the component force F2 acts as the pedal reaction force against the clutch pedal 50 when the clutch pedal 50 is depressed by the operator.

The stiffness of the spring 100 and the shape (such as an angle of the inclination) of the second contact surface 94b of the first member 78 are adjusted such that, in the transient stage in which the clutch pedal 50 is depressed by the operator during the coasting run, the pedal reaction force, whose magnitude is substantially equal to that of the pedal reaction force generated when the clutch pedal 50 is depressed during the normal run, can be obtained. With the shape of the second contact surface 94b of the first member 78 being appropriately adjusted, it is possible to generate the pedal reaction force in a simulated manner when the clutch pedal 50 is depressed by the operator during the coasting run, such that the generated pedal reaction force is substantially the same as that generated during the normal run. Therefore, when the operator depresses the clutch pedal 50 during the coasting run, the pedal reaction force, which is substantially the same as that generated when the operator depresses the clutch pedal 50 during the normal run, can be obtained so that it is possible to improve an operation feeling given to the operator when the operator depresses the clutch pedal 50.

Specifically, a portion of the second contact surface 94b, with which the cam roller 82 is in contact, is changed with change of the operating amount of the clutch pedal 50, i.e., with change of position of the first member 78, so that it is possible to accurately adjust a magnitude of the component force F2 acting as the pedal reaction force, such that the magnitude of the component force F2 is suitable depending on the operating amount of the clutch pedal 50, by adjusting the shape or angle of the inclination of the second contact surface 94b appropriately depending on the operating amount of the clutch pedal 50. That is, by appropriately adjusting the angle of the inclination of the second contact surface 94b, the pedal reaction force is adjustable within a wide range, thereby making it possible to cause the pedal reaction force to be generated in a simulated manner such that the generated pedal reaction force is not substantially different from the pedal reaction force generated during the normal run.

The view (e) of FIG. 4 shows the operation state of the separating mechanism 76 in a stage in which the front end of the first member 78 in the clutch engaging direction has been moved to the pedal ON position as a result of depression of the clutch pedal 50. This state shown in the view (e) of FIG. 4 is substantially the same as the state shown in the view (c) of FIG. 3, and accordingly description thereof is not provided.

As described above, in the present embodiment, in the transient stage in which the first member 78 is moved, by the operation of the clutch pedal 50, toward the second member 80 after the first and second members 78, 80 have been separated from each other, it is possible to generate the pedal reaction force that corresponds to the operating amount of the clutch pedal 50, owing to provision of the reaction-force generating mechanism 102. Specifically, since the reaction-force generating mechanism 102 includes the second contact surface 94b configured to convert the load F applied from the cam roller 82, into the pedal reaction force in the transient stage, it is possible to convert the load F into the pedal reaction force whose magnitude is suitably dependent on the operating amount of the clutch pedal 50, by adjusting the shape of the second contact surface 94b, thereby making it possible to improve an operation feeling given to the operator when the operator depresses the clutch pedal 50.

In the present embodiment, in the transient stage in which the first member 78 is moved toward the second member 80 by the operation of the clutch pedal 50, the cam roller 82 brought into contact with the second contact surface 94b of the first member 78, and the second contact surface 94b converts the load F applied from the cam roller 82, as the pedal reaction force, a converted force that forces the first member 78 in the clutch engaging direction. That is, the load F is converted into the converted force as the pedal reaction, depending on the shape of the second contact surface 94b with which the cam roller 82 is in contact, so that it is possible to generate the pedal reaction force whose magnitude is suitably dependent on the operating amount of the clutch pedal 50, by appropriately adjusting the shape of the second contact surface 94b.

There will be described other embodiments of this invention. The same reference signs as used in the above-described first embodiment will be used in the following embodiments, to identify the functionally corresponding elements, and descriptions thereof are not provided.

### SECOND EMBODIMENT

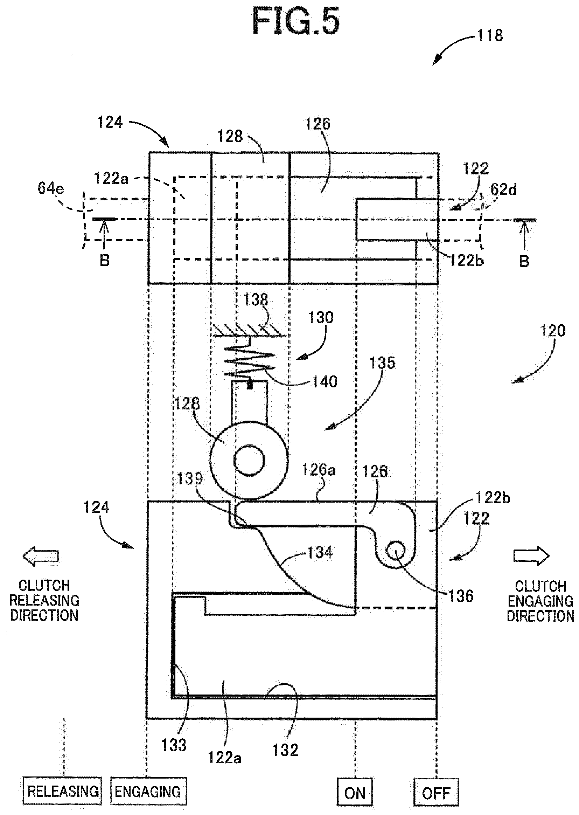

FIG. 5 is a set of views schematically showing a construction of a separating mechanism 120 that is included in an engaging/releasing device 118 according to this second embodiment. The view in an upper portion of FIG. 5 is an upper plan view of the separating mechanism 120 as seen from an upper side of a cam roller 128 that is described later. The view in a lower portion of FIG. 5 is a cross sectional view taken in line B-B indicated in the view in the upper portion. It is noted that FIG. 5 shows an operation state of the separating mechanism 120 when the clutch pedal 50 is released whereby the clutch 16 is fully engaged.

The separating mechanism 120 includes: a first member 122 connected to the rod 62d of the first cylinder 62; a second member 124 connected to the rod 64e of the second cylinder 64; a cam follower 126 provided to be pivotable relative to the first member 122; a cam roller 128 that is in contact with the cam follower 126; and a spring mechanism 130 that biases or constantly forces the cam roller 128 in a direction perpendicular to the clutch engaging and releasing directions in which the first and second members 122, 124 are movable. It is noted that the cam roller 128 corresponds to "pressing member" that is recited in the appended claims.

The first member 122 is connected to the clutch pedal 50 in a force transmittable manner, so that the first member 122 is movable by a distance corresponding to the operating amount of the clutch pedal 50 in the clutch engaging direction and the clutch releasing direction that are shown in FIG. 5. For example, in a state in which the clutch pedal 50 is released, a front end of the first member 122 in the clutch engaging direction is positioned in the pedal OFF position (indicated by "OFF" in FIG.. 5). In this state, the clutch 16 is placed in the engaged state except during the coasting run. With the clutch pedal 50 being depressed, the first member 122 is moved in the clutch releasing direction. When the operating amount of the clutch pedal 50 reaches a maximum value that is predetermined by an appropriate design theory, the front end of the first member 122 in the clutch engaging direction is positioned in the pedal ON position (indicated by "ON" in FIG.. 5). In this instance, the clutch 16 is placed into the released state.

The first member 122 is constituted mainly by a main body 122a that is provided by an elongated cylindrical body having a generally circular cross sectional shape, and a protrusion 122b that protrudes from the main body 122a toward the cam roller 128 and the spring mechanism 130. The main body 122a includes a fitted portion that is fitted in a fitting hole 132 provided in the second member 124. The protrusion 122b protrudes from a portion of the main body 122a which is adjacent to the fitted portion in a longitudinal direction of the main body 122a and which is located on a front side of the fitted portion in the clutch engaging direction.

The second member 124 is connected through the second cylinder 64 to the release cylinder 54 in a force transmittable manner. When the clutch pedal 50 is depressed, the second member 124 is moved together with the first member 122 in the clutch releasing direction. Specifically, when the first member 122 is moved in the clutch releasing direction with the clutch pedal 50 being depressed, the first and second members 122, 124 are positioned in respective positions adjacent to each other, with a distal end of the fitted portion of the main body 122a of the first member 122 being in contact with a bottom surface 133 of the fitting hole 132 of the second member 124. Thus, since the second member 124 is pressed by the first member 122, the second member 124 is moved together with the first member 122 in the clutch releasing direction.

The second member 124 is connected through the second cylinder 64 to the actuator 75 (that is constituted by the electric motor 72 and the speed reducer 74) in a drive-force transmittable manner. Specifically, the electric motor 72 is connected through the speed reducer 74 to the rod 64e of the second cylinder 64 in a drive-force transmittable manner. Thus, with the force of the electric motor 72 being transmitted to the second member 124, the second member 124 is movable in the clutch engaging and releasing directions. For example, when the front end of the second member 124 in the clutch releasing direction is positioned in the clutch engaging position (indicated by "ENGAGING" in FIG. 5), the clutch 16 is placed in the engaged state. When the front end of the second member 124 in the clutch releasing direction is positioned in the clutch releasing position (indicated by "RELEASING" in FIG. 5), the clutch 16 is placed in the released state.

The fitting hole 132, which is provided in the second member 124, extends in a direction parallel to the clutch engaging and releasing directions in which the second member 124 as well as the first member 122 is movable, and receives the above-described fitted portion of the main body 122a of the first member 122, which is fitted in the fitting hole 132. The first and second members 122, 124 are movable relative to each other in the clutch engaging and releasing directions. The second member 124 is provided with an inclined surface 134 that is opposed to the cam roller 128 in an opposed direction. The inclined surface 134 is inclined with respect to a direction parallel to the clutch engaging and releasing directions such that a distance between the inclined surface 134 and the spring mechanism 130 in the above-described opposed direction is gradually increased in the clutch engaging direction, i.e., in rightward direction as seen in FIG. 5. It is noted that the inclined surface 134 may be referred also to as a cam profile surface 134.

The separating mechanism 120 is provided with a reaction-force generating mechanism 135 that is configured, in the transient stage in which the clutch pedal 50 is being depressed by the operator during the coasting run, to generate the pedal reaction force whose magnitude corresponds to the operating amount of the clutch pedal 50. The reaction-force generating mechanism 135 is constituted mainly by the above-described cam roller 128 that is rotatable, the above-described inclined surface 134 provided in the second member 124, the above-described cam follower 126 which is connected at an end portion thereof to the first member 122 so as to be pivotable relative to the first member 122 and which is to be brought into contact at another end portion thereof with the inclined surface 134, and the above-described spring mechanism 130 that constantly forces the cam roller 128 in a direction perpendicular to the clutch engaging and releasing directions in which the first and second members 122, 124 are movable.

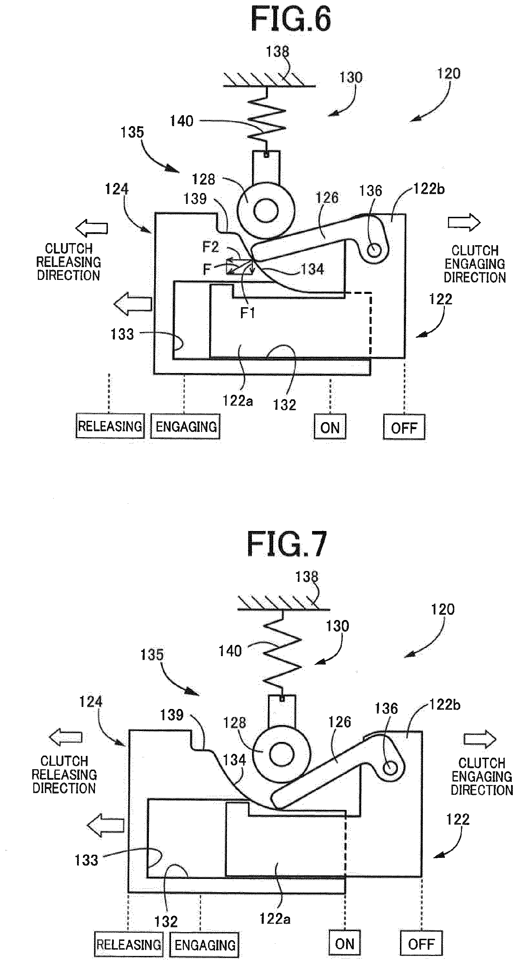

The cam follower 126 is constituted by an elongated flat plate member, and has a flat surface 126a that is to be brought into contact with the cam roller 128. The cam follower 126 is connected at one of its longitudinally opposite end portions to the protrusion 122b of the first member 122 through a supporting portion 136 that is provided in the protrusion 122b, such that the cam follower 126 is pivotable relative to the first member 122 about the supporting portion 136. When the first and second members 122, 124 are positioned in respective positions adjacent to each other, the cam follower 126 is in contact at the other of the longitudinally opposite end portions with a cutout or recess 139 that is provided in the second member 124. The recess 139 is located to be adjacent to a front end portion of the inclined surface 134 in the clutch releasing direction. The recess 139 has a depth (as measured in the above-described opposed direction) that makes the flat surface 126a of the cam follower 126 (with which the cam roller 128 is in contact) substantially parallel to the clutch engaging and releasing directions (in which the first and second members 122, 124 are movable) in a state in which the cam follower 126 is in contact at the other of the longitudinally opposite end portions (hereinafter simply referred to as the other end portion) with the recess 139. On the other hand, when the first and second members 122, 124 are positioned in respective positions distant from each other in the clutch engaging and releasing directions, without an axially distal end (i.e., a front end in the clutch releasing direction) of the first member 122 being in contact with the bottom surface 133 of the fitting hole 132 of the second member 124, the cam follower 126 is in contact at the other of the longitudinally opposite end portions with the inclined surface 134 of the second member 124, as shown in FIGS. 6-8. It is noted that the cam follower 126, which is connected at the one of the longitudinally opposite end portions to the first member 122 through the supporting portion 136, may be referred also to as a connected member.

The spring mechanism 130 includes: a fixing member 138 that corresponds to "pressing-member supporting member" recited in the appended claims; and a spring 140 that is connected at one of its opposite end portions to the fixing member 138 and is connected at the other of its longitudinally opposite end portions to the cam roller 128. The spring 140 constantly forces the cam roller 128 in the direction perpendicular to the clutch engaging and releasing directions in which the first and second members 122, 124 are movable. The cam roller 128 is forced by the spring 140 so as to be in contact with the flat surface 126a of the cam follower 126, and applies, to the cam follower 126, a load acting in the direction perpendicular to the clutch engaging and releasing directions in which the first and second members 122, 124 are movable.

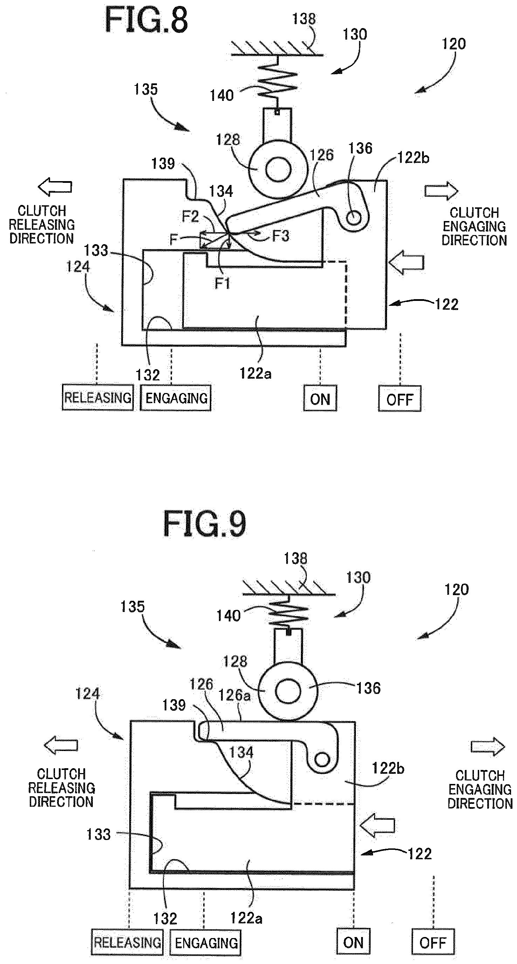

In the reaction-force generating mechanism 135 constructed as described above, the other end portion of the cam follower 126 is moved along the inclined surface 134 of the second member 124, in the transient stage in which the clutch pedal 50 is being depressed during the coasting run, namely, in the transient stage in which the first member 122 is moved toward the second member 124 by depression of the clutch pedal 50 after the first and second members 122, 124 have been separated from each other. In this transient stage, the cam roller 128, which is in contact with the cam follower 126, presses the cam follower 126, so that the load F applied from the cam roller 128 is transmitted to the inclined surface 134 through the other end portion of the cam follower 126. This load F is converted, by the inclined surface 134, into a component force F1 that acts in the direction perpendicular to the clutch engaging and releasing directions in which the first and second members 122, 124 are movable and a component force F2 that acts in the clutch releasing direction (see FIG. 8). Further, a reaction force F3 (see FIG. 8) acting in the clutch engaging direction is transmitted to the cam follower 126, and is transmitted to the first member 122 through the cam follower 126. Therefore, in this second embodiment, the reaction force F3 acts as the pedal reaction force that is transmitted to the clutch pedal 50. The reaction force F3 is substantially equal to the component force F2 in magnitude, and is opposite to the component force F2 in direction. Further, since a portion of the inclined surface 134, with which the other end portion of the cam follower 126 is in contact, is changed with change of the operating amount of the clutch pedal 50, it is possible to accurately adjust a magnitude of the reaction force F3 acting as the pedal reaction force, such that the magnitude of the reaction force F3 is suitable depending on the operating amount of the clutch pedal 50, by adjusting the shape or angle of the inclination of the inclined surface 134 appropriately depending on the operating amount of the clutch pedal 50.

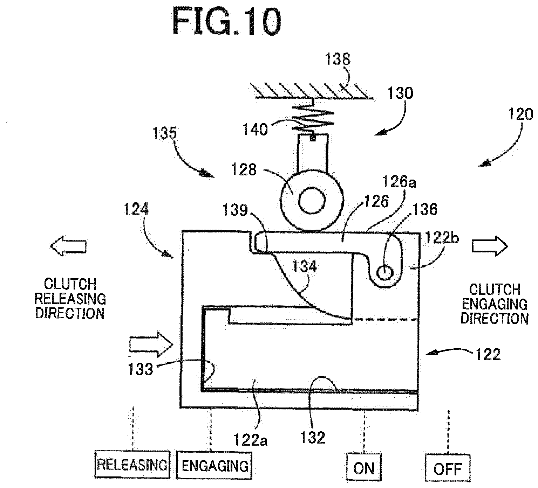

The operation of the separating mechanism 120 during the coasting run will be described with reference to FIGS. 6-10.

FIG. 6 shows the operation state of the separating mechanism 120 in the transient stage in which the engaged state of the clutch 16 shown in FIG. 5 is being switched to the coasting run. In this transient stage, the second member 124 is moved in the clutch releasing direction by the force of the electric motor 72, while the first member 122 is held in the pedal OFF position as in the stage shown in the FIG. 5. Therefore, the second member 124 is moved relative to the first member 122 in a direction away from the first member 122.

In this transient stage, the cam follower 126 is pressed by the cam roller 128, whereby the other end portion of the cam follower 126 presses the inclined surface 134 of the second member 124 while being moved downwardly along the inclined surface 134. The load F by which the other end portion of the cam follower 126 presses the inclined surface 134 acts in the direction perpendicular to the inclined surface 134. Further, the load F is converted into the component forces F1, F2, wherein the component force F1 acts in the direction perpendicular to the clutch engaging and releasing directions in which the second member 124 as well as the first member 122 is movable, and the component force F2 acts in the clutch releasing direction. Therefore, in the transient stage in which the engaged state of the clutch 16 is being switched to the coasting run, the component force F2 acting in the clutch releasing direction is transmitted to the second member 124 through the cam follower 126. This component force F2 acts as an assisting force F2 for assisting the movement of the second member 124 in the clutch releasing direction, so that it is possible to reduce the force required to be generated by the electric motor 72 to move the second member 124 in the clutch releasing direction, thereby consequently enabling the electric motor 72 to be made compact in size.

FIG. 7 shows the operation state of the separating mechanism 120 in a stage in which the switching from the state shown in FIG. 6 to the coasting run has been completed, namely, in a stage in which the front end of the second member 124 in the clutch releasing direction has reached the clutch releasing position. In this state, the first and second members 122, 124 are separated from each other by a maximum distance, and the other end portion of the cam follower 126 is in contact with a lower end of the inclined surface 134 of the second member 124.

FIG. 8 shows the operation state of the separating mechanism 120 in a transient stage in which the clutch pedal 50 is being depressed after the switching to the coasting run has been completed as shown in FIG. 7. In this transient stage, the first member 122, which has been separated from the second member 124 by the maximum distance, is moved toward the second member 124 by depression of the clutch pedal 50. Further, in this transient stage, the other end portion of the cam follower 126, which is in contact with the inclined surface 134 of the second member 124, is moved upwardly along the inclined surface 134 as the first member 122 is moved toward the second member 124.

Further, in this transient stage shown in FIG. 8, the load F is applied from the cam roller 128 to the inclined surface 134 of the second member 124. This load F, which acts in a direction perpendicular to the inclined surface 134, is converted by the inclined surface 134 into the component force F1 that acts in the direction perpendicular to the clutch engaging and releasing directions in which the first and second members 122, 124 are movable and the component force F2 that acts in the clutch releasing direction. Further, the reaction force F3 acting in the clutch engaging direction is transmitted to the cam follower 126, and is transmitted to the first member 122 through the cam follower 126. Therefore, the reaction force F3 acts as the pedal reaction force that is transmitted to the clutch pedal 50. The reaction force F3 is substantially equal to the component force F2 in magnitude, and is opposite to the component force F2 in direction. Further, since the magnitude of the reaction force F3 can be adjusted to a desired magnitude value by modifying or adjusting the shape or angle of the inclination of the inclined surface 134, the shape or angle of the inclination of the inclined surface 134 is adjusted such that the pedal reaction force, which is substantially the same as that generated upon depression of the clutch pedal 50 during the normal run, can be generated in a simulated manner. Therefore, when the operator depresses the clutch pedal 50 during the coasting run, the pedal reaction force, which is substantially the same as that generated when the operator depresses the clutch pedal 50 during the normal run, can be obtained, so that it is possible to improve an operation feeling given to the operator when the operator depresses the clutch pedal 50. It is noted that, in this transient stage shown in FIG. 8 in which a load applied from the reaction-force generating mechanism 135 to the flat surface 126a of the cam follower 126 which is held at its opposite end portions by the supporting portion 136 and the inclined surface 134 (that may be referred also to as the cam profile surface 134 as described above) and which is inclined with respect to the direction parallel to the clutch engaging and releasing directions such that a distance between the flat surface 126a and the spring mechanism 130 in the above-described opposed direction is gradually increased in the clutch releasing direction, it is possible to interpret that the applied load is converted by the flat surface 126a into a components force acting in the direction perpendicular to the clutch engaging and releasing directions and a component force acting as the pedal reaction force in the clutch releasing direction. In this interpretation, the flat surface 126a of the cam follower 126 corresponds to "inclined surface" recited in the appended claims.

FIG. 9 is a view showing the operation state of the separating mechanism 120 in a stage in which the operating amount of the clutch pedal 50 becomes the maximum value that is predetermined by an appropriate design theory, after the state shown in FIG. 8. In this stage, the first member 122 reaches the pedal ON position (indicated by "ON" in FIG. 9), and the distal end of the fitted portion of the main body 122a, which is fitted in the fitting hole 132 of the second member 124, is in contact with the bottom surface 133 of the fitting hole 132. Further, the other end portion of the cam follower 126 has climbed up the inclined surface 134 so as to be in contact with the recess 139. In this stage, the flat surface 126a of the cam follower 126, with which the cam roller 128 is in contact, becomes parallel to the clutch engaging and releasing directions in which the first and second members 122, 124 are movable.

FIG.. 10 a view showing the operation state of the separating mechanism 120 in a transient stage in which the clutch pedal 50 is being released after the operating amount of the clutch pedal 50 has been maximized as shown in FIG. 9. In this transient stage, the first and second members 122, 124 are moved in the clutch engaging direction by cooperation of the reaction force transmitted from the clutch 16 and an assist torque generated by the electric motor 72, such that the front end of the first member 122 in the clutch engaging direction is to be positioned in the pedal OFF position and such that the front end of the second member 124 in the clutch releasing direction is to be positioned in the clutch engaging position. Further, in this transient stage in which the first and second members 122, 124 are moved in the clutch engaging direction, the cam roller 128 is rotated on the flat surface 126a of the cam follower 126, which has become parallel to the clutch engaging and releasing directions and which is moved together with the first and second members 122, 124 relative to the cam roller 128, so that substantially no reaction force is transmitted to the clutch pedal 50 due to the cam roller 128 that presses the flat surface 126a of the cam follower 126.

In the second embodiment, in the transient stage in which the first member 122 is moved toward the second member 124 by the operation of the clutch pedal 50, the other end portion of the cam follower 126 forced by the cam roller 128 is brought into contact with the inclined surface 134, and the load F applied from the cam follower 126 is converted into the pedal reaction force acting in the clutch engaging direction, depending on the shape of the inclined surface 134 with which the other end portion of the cam follower 126 is in contact. The pedal reaction force is transmitted to the first member 122 through the cam follower 126. It is possible to generate the pedal reaction force whose magnitude is suitably dependent on the operating amount of the clutch pedal 50, by appropriately adjusting the shape of the inclined surface 134. Further, when the first and second members 122, 124 are adjacent to each other in the clutch engaging and releasing directions, the contact surface 126a of the cam follower 126 with which the cam roller 128 is in contact is made parallel to the clutch engaging and releasing directions in which the first and second members 122, 124 are movable. Therefore, in the transient stage in which the first and second members 122, 124 are moved together with each other in clutch engaging direction, after the clutch pedal 50 has been released, it is possible to reduce a reaction force generated based on the load F applied from the cam roller 128 and acting in the direction perpendicular to the clutch engaging and releasing directions in which the first and second members 122, 124 are movable. Further, in this transient stage, the cam roller 128, which is rotatable, is rotated so that substantially no reaction force due to the load F applied from the cam roller 128 is generated.

### THIRD EMBODIMENT

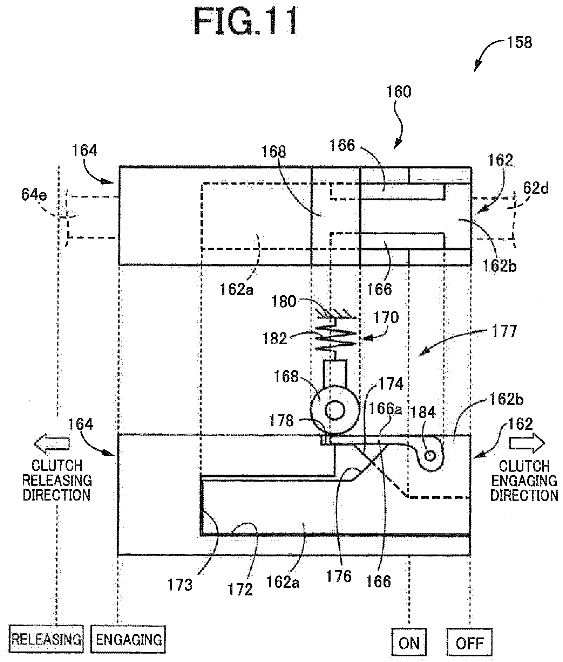

FIG. 11 is a set of views schematically showing a construction of a separating mechanism 160 that is included in an engaging/releasing device 158 according to this third embodiment. The view in an upper portion of FIG. 11 is an upper plan view of the separating mechanism 160 as seen from an upper side of a cam roller 168 that is described later. The view in a lower portion of FIG. 11 is a cross sectional view of the separating mechanism 160. It is noted that FIG. 11 shows an operation state of the separating mechanism 160 when the clutch pedal 50 is released whereby the clutch 16 is fully engaged.

The separating mechanism 160 includes: a first member 162 connected to the rod 62d of the first cylinder 62; a second member 164 connected to the rod 64e of the second cylinder 64; a pair of cam followers 166 provided to be pivotable relative to the first member 162; a cam roller 168 that is in contact with the cam follower 166; and a spring mechanism 170 that biases or constantly forces the cam roller 168 in a direction perpendicular to the clutch engaging and releasing directions in which the first and second members 162, 164 are movable. It is noted that the cam roller 168 corresponds to "pressing member" that is recited in the appended claims.

The first member 162 is connected to the clutch pedal 50 in a force transmittable manner, so that the first member 162 is movable by a distance corresponding to the operating amount of the clutch pedal 50 in the clutch engaging direction and in the clutch releasing direction. For example, in a state in which the clutch pedal 50 is released, a front end of the first member 162 in the clutch engaging direction is positioned in the pedal OFF position (indicated by "OFF" in FIG.. 11). In this state, the clutch 16 is placed in the engaged state except during the coasting run. With the clutch pedal 50 being depressed, the first member 162 is moved in the clutch releasing direction. When the operating amount of the clutch pedal 50 reaches a maximum value that is predetermined by an appropriate design theory, the front end of the first member 162 in the clutch engaging direction is positioned in the pedal ON position (indicated by "ON" in FIG.. 11). In this instance, the clutch 16 is placed into the released state.

The first member 162 is constituted mainly by a main body 162a that is provided by an elongated cylindrical body having a generally circular cross sectional shape, and a protrusion 162b that protrudes from the main body 162a toward the spring mechanism 170. The main body 162a includes a fitted portion that is fitted in a fitting hole 172 provided in the second member 164. The protrusion 162b protrudes from a portion of the main body 162a which is adjacent to the fitted portion in a longitudinal direction of the main body 162a and which is located on a front side of the fitted portion in the clutch engaging direction.

The second member 164 is connected through the second cylinder 64 to the release cylinder 54 in a force transmittable manner. When the clutch pedal 50 is depressed, the second member 164 is moved together with the first member 162 in the clutch releasing direction. Specifically, when the first member 162 is moved in the clutch releasing direction with the clutch pedal 50 being depressed, the first and second members 162, 164 are positioned in respective positions adjacent to each other, with a distal end of the fitted portion of the main body 162a of the first member 162 being in contact with a bottom surface 173 of the fitting hole 172 of the second member 164. Thus, since the second member 164 is pressed by the first member 162, the second member 164 is moved together with the first member 162 in the clutch releasing direction.

The second member 164 is connected through the second cylinder 64 to the actuator 75 (that is constituted by the electric motor 72 and the speed reducer 74) in a drive-force transmittable manner. Specifically, the electric motor 72 is connected through the speed reducer 74 to the rod 64e of the second cylinder 64 in a drive-force transmittable manner. Thus, with the force of the electric motor 72 being transmitted to the second member 164, the second member 164 is movable in the clutch engaging and releasing directions. For example, when the front end of the second member 164 in the clutch releasing direction is positioned in the clutch engaging position (indicated by "ENGAGING" in FIG. 11), the clutch 16 is placed in the engaged state. When the front end of the second member 164 in the clutch releasing direction is positioned in the clutch releasing position (indicated by "RELEASING" in FIG. 11), the clutch 16 is placed in the released state.

The fitting hole 172, which is provided in the second member 164, extends in a direction parallel to the clutch engaging and releasing directions in which the second member 164 as well as the first member 162 is movable, and receives the above-described fitted portion of the main body 162a of the first member 162, which is fitted in the fitting hole 172. The first and second members 162, 164 are movable relative to each other in the clutch engaging and releasing directions. The second member 164 is provided with an inclined surface 174 which is opposed to the cam roller 168 in an opposed direction, such that the cam roller 168 is to be brought into contact with the inclined surface 174. The inclined surface 174 is inclined with respect to a direction parallel to the clutch engaging and releasing directions such that a distance between the inclined surface 174 and the spring mechanism 170 in the above-described opposed direction is gradually increased in the clutch engaging direction, i.e., in rightward direction as seen in FIG. 11.

The first member 162 is provided with an inclined surface 176 which is located in an opposed portion of the protrusion 162b opposed to cam roller 168 in an opposed direction, such that the cam roller 168 is to be brought into contact with the inclined surface 176. The inclined surface 176 is inclined with respect to the direction parallel to the clutch engaging and releasing directions such that a distance between the inclined surface 176 and the spring mechanism 170 in the above-described opposed direction is gradually increased in the clutch releasing direction, i.e., in leftward direction as seen in FIG. 11.

The separating mechanism 160 is provided with a reaction-force generating mechanism 177 that is configured, in the transient stage in which the clutch pedal 50 is being depressed by the operator during the coasting run, to generate the pedal reaction force whose magnitude corresponds to the operating amount of the clutch pedal 50. The reaction-force generating mechanism 177 is constituted mainly by the above-described cam roller 168 that is rotatable, the above-described spring mechanism 170 that constantly forces the cam roller 168 in the direction perpendicular to the clutch engaging and releasing directions in which the first and second members 162, 164 are movable, the above-described inclined surface 176 provided in the first member 162, and the above-described pair of cam followers 166 which are connected at their respective end portions to respective supporting portions 184 of the first member 162 so as to be pivotable relative to the first member 162 and which are biased or constantly forced so as to be constantly held in contact with the cam roller 168.

Each of the two cam followers 166 is connected at one of its longitudinally opposite end portions to a corresponding one of the supporting portions 184 that are provided in the protrusion 162b of the first member 162, such that the cam follower 166 is pivotable relative to the first member 162. Each of the two cam followers 166 is constituted by an elongated member, and is pivotable about the corresponding supporting portion 184 to which the one of the longitudinally opposite end portions is connected. Each of the supporting portions 184 of the protrusion 162b is provided with a spring (not shown) by which a corresponding one of the cam followers 166 is biased or constantly forced so as to be constantly held in contact with the cam roller 168. Thus, each of the cam followers 166 is constantly held in contact at a flat surface 166a thereof with the cam roller 168. A biasing force applied from the spring (not shown) to the corresponding cam follower 166 is made sufficiently smaller than a biasing force generated by the spring mechanism 170, so that the cam follower 166 is pivoted following the cam roller 168 while being in contact with the cam roller 168.

When the first and second members 162, 164 are positioned in respective positions adjacent to each other, each of the cam followers 166 is in contact at the other of the longitudinally opposite end portions with a recess 178 that is provided in the second member 164. The recess 178 is located to be adjacent to a front end portion of the inclined surface 174 in the clutch releasing direction. The recess 178 has a depth (as measured in the above-described opposed direction) that makes the flat surfaces 166a of the cam followers 166 (with which the cam roller 168 is in contact) substantially parallel to the clutch engaging and releasing directions (in which the first and second members 162, 164 are movable) in a state in which each of the cam followers 166 is in contact at the other of the longitudinally opposite end portions (hereinafter simply referred to as the other end portion) with the recess 178, namely, in a state in which the first and second members 162, 164 are positioned in the respective positions adjacent to each other.

The spring mechanism 170 includes: a fixing member 180 that corresponds to "pressing-member supporting member" recited in the appended claims; and a spring 182 that is connected at one of its opposite end portions to the fixing member 180 and is connected at the other of its longitudinally opposite end portions to the cam roller 168. The spring 182 constantly forces the cam roller 168 in the direction perpendicular to the clutch engaging and releasing directions in which the first and second members 162, 164 are movable. The cam roller 168 is biased or constantly forced by the spring 182 in the in the direction perpendicular to the clutch engaging and releasing directions.

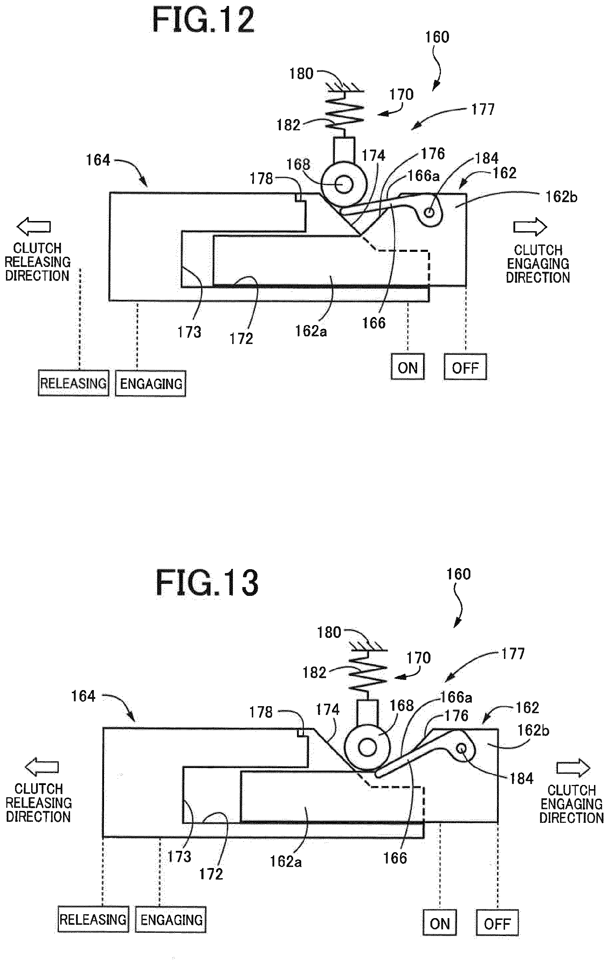

In the reaction-force generating mechanism 177 constructed described above, too, in the transient stage in which the clutch pedal 50 is being depressed during the coasting run, namely, in the transient stage in which the first member 162 is being moved toward the second member 164 by depression of the clutch pedal 50 after the first and second members 162, 164 have been separated from each other, it is possible to generate the pedal reaction force appropriately suitable for the operating amount of the clutch pedal 50. Hereinafter, the operation of the separating mechanism 160 during the coasting run will be described with reference to FIGS. 12-15.

FIG. 12 shows the operation state of the separating mechanism 160 in the transient stage in which the engaged state of the clutch 16 shown in FIG. 11 is switched to the coasting run. In this transient stage, the second member 164 is moved in the clutch releasing direction by the force of the electric motor 72, while the first member 162 is held in the same position as in the stage shown in the FIG. 11. Therefore, the second member 164 is moved relative to the first member 162 in a direction away from the first member 162. In this transient stage, the cam roller 168 is in contact with the inclined surface 174. Further, the cam follower 166, which is constantly forced by the spring (not shown), is pivoted while following the cam roller 168.

FIG. 13 shows the operation state of the separating mechanism 160 in a stage in which the switching from the state shown in FIG. 12 to the coasting run has been completed, namely, in a stage in which the front end of the second member 164 in the clutch releasing direction has reached the clutch releasing position (indicated by "RELEASING" in FIG. 13). In this state, the first and second members 162, 164 are separated from each other by a maximum distance, and the cam roller 168 is in contact with the first member 162.

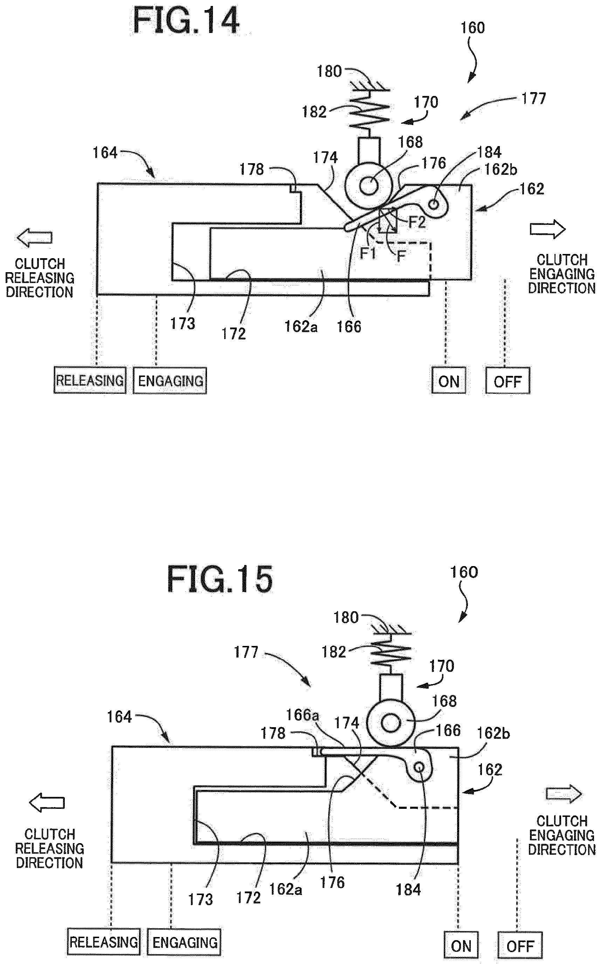

FIG. 14 shows the operation state of the separating mechanism 160 in a transient stage in which the clutch pedal 50 is being depressed after the switching to the coasting run has been completed as shown in FIG. 13. In this transient stage, the first member 162, which has been separated from the second member 164 by the maximum distance, is moved toward the second member 164 by depression of the clutch pedal 50. Further, in this transient stage in which the clutch pedal 50 is being depressed after the switching to the coasting run has been completed, the cam roller 168 is in contact with the inclined surface 176 of the first member 162, and is pressed against the inclined surface 176 by the biasing force of the spring 182.

A load F, by which the cam roller 168 is pressed against the inclined surface 176, acts in a direction perpendicular to the inclined surface 176. This load F is converted by the inclined surface 176 into a component force F1 that acts in the direction perpendicular to the clutch engaging and releasing directions in which the first member 162 as well as the second member 164 is movable and a component force F2 that acts in the clutch releasing direction. This component force F2 acts as the pedal reaction force that is transmitted to the clutch pedal 50. Further, since the magnitude of the component force F2 can be adjusted to a desired magnitude value by modifying or adjusting the shape or angle of the inclination of the inclined surface 176, the shape or angle of the inclination of the inclined surface 176 is adjusted such that the pedal reaction force, which is substantially the same as that generated upon depression of the clutch pedal 50 during the normal run, can be generated in a simulated manner. Therefore, when the operator depresses the clutch pedal 50 during the coasting run, the pedal reaction force, which is substantially the same as that generated when the operator depresses the clutch pedal 50 during the normal run, can be obtained, so that it is possible to improve an operation feeling given to the operator when the operator depresses the clutch pedal 50.

FIG. 15 is a view showing the operation state of the separating mechanism 160 in a stage in which the operating amount of the clutch pedal 50 becomes the maximum value, after the state shown in FIG. 14. In this stage, the first member 162 reaches the pedal ON position (indicated by "ON" in FIG. 15), and the distal end of the fitted portion of the main body 162a, which is fitted in the fitting hole 172 of the second member 164, is in contact with the bottom surface 173 of the fitting hole 172. Further, the other end portion of the cam follower 166 is in contact with the recess 178. In this stage, the flat surface 166a of the cam follower 166, with which the cam roller 168 is in contact, becomes parallel to the clutch engaging and releasing directions in which the first and second members 162, 164 are movable.

When the clutch pedal 50 is released after the state shown in FIG. 15, the first and second members 162, 164 are moved in the clutch engaging direction. In this instance, the cam roller 168 is rotated on the flat surface 166a of the cam follower 166, which has become parallel to the clutch engaging and releasing directions and which is moved together with the first and second members 162, 164 relative to the cam roller 168, so that substantially no reaction force is transmitted to the clutch pedal 50 due to the cam roller 168 that presses the cam follower 166.

In the third embodiment, in the transient stage in which the first member 162 is moved toward the second member 164 by the operation of the clutch pedal 50, the cam roller 168 is brought into contact with the inclined surface 176 of the first member 162, and the inclined surface 176 converts the load F applied from the cam roller 168, into, as the pedal reaction force, the converted force that forces the first member 162 in the clutch engaging direction. That is, the load F is converted into the converted force as the pedal reaction, depending on the shape of the inclined surface 176 with which the cam roller 168 is in contact, so that it is possible to generate the pedal reaction force whose magnitude is suitably dependent on the operating amount of the clutch pedal 50, by appropriately adjusting the shape of the inclined surface 176. Further, when the first and second members 162, 164 are adjacent to each other in the clutch engaging and releasing directions, the contact surface 166a of the cam follower 166 with which the cam roller 168 is in contact is made parallel to the clutch engaging and releasing directions in which the first and second members 162, 164 are movable. Therefore, in the transient stage in which the first and second members 162, 164 are moved together with each other in clutch engaging direction, after the clutch pedal 50 has been released, it is possible to reduce a reaction force generated based on the load F applied from the cam roller 168 and acting in the direction perpendicular to the clutch engaging and releasing directions in which the first and second members 162, 164 are movable. Further, in this transient stage, the cam roller 168, which is rotatable, is rotated so that substantially no reaction force due to the load F applied from the cam roller 168 is generated.

While the preferred embodiments of this invention have been described in detail by reference to the drawings, it is to be understood that the invention may be otherwise embodied.

For example, in the first embodiment, the cam roller 82 is forced in the direction perpendicular to the clutch engaging and releasing directions in which the first and second members 78, 80 are movable. However, the cam roller 82 may be forced in other direction such as a direction inclined with respect to the clutch engaging and releasing directions.

In the first through third embodiments, the pressing member is constituted by the cam roller (82; 128; 168) that is rotatable. However, each of the embodiments may be modified such that the pressing member is constituted by an unrotatable member in place of the cam roller (82; 128; 168). However, in such a modification with the unrotatable member, when one of the first member (78; 122; 162) and the second member (80; 124; 164) is moved while being in contact with the unrotatable member, a friction force is generated between the unrotatable member and the one of the first member (78; 122; 162) and the second member (80; 124; 164), so that the pedal reaction force could be affected by the generated friction force. Therefore, it is actually preferable that the pressing member is constituted by a rotatable member such as the cam roller (82; 128; 168).

In the first through third embodiments, although each of the first and second members (78, 80; 122, 124; 162, 164) is constituted by a cylindrical member having a generally circular cross sectional shape, it may be constituted by a member having other cross sectional shape such as a rectangular cross sectional shape, as long as the force is transmittable between the two members when the two members are adjacent to each other and in contact with each other.

It is to be understood that the embodiments described above are given for illustrative purpose only, and that the present invention may be embodied with various modifications and improvements which may occur to those skilled in the art.

### NOMENCLATURE OF ELEMENTS

10, 118, 158: engaging/releasing device
16: clutch
50: clutch pedal
54: clutch release cylinder (clutch cylinder)
65: force transmitting mechanism
75: actuator
76, 120, 160: separating mechanism
78, 122, 162: first member
80, 124, 164: second member
82, 128, 168: cam roller (pressing member)
84, 130, 170: spring mechanism
94b: second contact surface (inclined surface)
102, 135, 177: reaction-force generating mechanism
126, 166: cam follower
134, 176: inclined surface
139, 178: recess

## Claims

1. A clutch engaging/releasing device (10; 118; 158) for engaging and releasing a clutch (16), said clutch engaging/releasing device (10; 118; 158) comprising:
a clutch pedal (50) configured, when being operated by an operator, to receive a depressing force that is applied by the operator;
a clutch cylinder (54) to which the depressing force is to be transmitted from said clutch pedal (50);
a force transmitting mechanism (65) configured to transmit the depressing force from said clutch pedal (50) to said clutch cylinder (54); and
an actuator (75) which is connected to said force transmitting mechanism (65) and which is configured to actuate said clutch cylinder (54) through said force transmitting mechanism (65),
wherein said force transmitting mechanism (65) is provided with a separating mechanism (76; 120; 160) configured to separate a force transmitting path between said clutch pedal (50) and said clutch cylinder (54),
wherein said separating mechanism (76; 120; 160) includes:
a first member (78; 122; 162) which is to be moved, depending on an amount of operation of said clutch pedal (50) by the operator, in a clutch engaging direction for engaging said clutch (16) or in a clutch releasing direction for releasing said clutch (16);
a second member (80; 124; 164) which is to be moved together with said first member (78; 122; 162) in the clutch releasing direction when the depressing force is transmitted from said clutch pedal (50) to said second member (80; 124; 164) through said first member (78; 122; 162), and which is to be moved in the clutch engaging direction or in the clutch releasing direction by operation of said actuator (75); and
a reaction-force generating mechanism (102; 135; 177) configured to generate a pedal reaction force (F2; F3; F2) which corresponds to the amount of the operation of said clutch pedal (50) and which acts against said clutch pedal (50), when said first member (78; 122; 162) is moved toward said second member (80; 124; 164) by the operation of said clutch pedal (50) after said first and second members (78, 80; 122, 124; 162, 164) have been separated from each other, and
wherein said reaction-force generating mechanism (102; 135; 177) includes: a pressing member (82; 128; 168) which is forced toward said first and second members (78, 80; 122, 124; 162, 164); and an inclined surface (94b; 126a, 134; 176) which is provided for converting a load (F) applied to said inclined surface (94b; 126a, 134; 176) from said pressing member (82; 128; 168), into the pedal reaction force (F2; F3; F2).

2. The clutch engaging/releasing device (10; 158) according to claim 1,
wherein said pressing member (82; 168) is supported by a pressing-member supporting member (98; 180), and is opposed to said first and second members (78, 80; 162, 164) in an opposed direction,
wherein said inclined surface (94b; 176) is provided in said first member (78; 162), and is inclined with respect to a direction parallel to the clutch engaging and releasing directions such that a distance between said inclined surface (94b; 176) and said pressing-member supporting member (98; 180) in the opposed direction is increased in the clutch releasing direction, and
wherein, when said first member (78; 162) is moved toward said second member (80; 164) by the operation of said clutch pedal (50) after said first and second members (78, 80; 162, 164) have been separated from each other, said pressing member (82; 168) is in contact with said inclined surface (94b; 176), and said inclined surface (94b; 176) converts the load (F) into, as the pedal reaction force (F2), a converted force (F2) that forces said first member (78; 162) in the clutch engaging direction.

3. The clutch engaging/releasing device (118) according to claim 1,
wherein said pressing member (128) is supported by a pressing-member supporting member (138), and is opposed to said first and second members (122, 124) in an opposed direction,
wherein said reaction-force generating mechanism (135) further includes a cam follower (126) connected at an end portion thereof to said first member (122) and pivotable relative to said first member (122) about said end portion thereof,
wherein said pressing member (128) is in contact with a contact surface (126a) of said cam follower (126), and is forced in a direction perpendicular to the clutch engaging and releasing directions,
wherein said inclined surface (134) is provided in said second member (124), and is inclined with respect to a direction parallel to the clutch engaging and releasing directions such that a distance between said inclined surface (134) and said pressing-member supporting member (138) in the opposed direction is increased in the clutch engaging direction,
wherein said cam follower (126) is to be in contact at another end portion thereof with said inclined surface (134), and
wherein said contact surface (126a) of said cam follower (126) with which said pressing member (128) is in contact is made parallel to the clutch engaging and releasing directions when said first and second members (122, 124) are adjacent to each other.

4. The clutch engaging/releasing device (158) according to claim 1,
wherein said inclined surface (176) is provided in said first member (162),
wherein said pressing member (168) is supported by a pressing-member supporting member (180), and is opposed to said first and second members (162, 164) in an opposed direction,
wherein said reaction-force generating mechanism (177) further includes a cam follower (176) connected at an end portion thereof to said first member (162) and pivotable relative to said first member (162) about said end portion thereof,
wherein said cam follower (176) is forced to be constantly held in contact with said pressing member (168),
wherein said pressing member (168) is in contact with a contact surface (166a) of said cam follower (166), and is forced in a direction perpendicular to the clutch engaging and releasing directions,
wherein said pressing member (168) is in contact with said inclined surface (176) when said first member (162) is moved toward said second member (164) by the operation of said clutch pedal (50) after said first and second members (162, 164) have been separated from each other,
wherein said inclined surface (176) is inclined with respect to a direction parallel to the clutch engaging and releasing directions such that a distance between said inclined surface (176) and said pressing-member supporting member (180) in the opposed direction is increased in the clutch releasing direction, and
wherein said contact surface (166a) of said cam follower (166) with which said pressing member (168) is in contact is made parallel to the clutch engaging and releasing directions when said first and second members (162, 164) are adjacent to each other.

5. The clutch engaging/releasing device (10; 118; 158) according to any one of claims 1-4, wherein said reaction-force generating mechanism (102; 135; 177) further includes a spring mechanism (84; 130; 170) which is connected to said pressing member (82; 128; 168) and which forces said pressing member (82; 128; 168) in a direction toward said first and second members (78, 80; 122, 124; 162, 164).

6. The clutch engaging/releasing device (10; 118; 158) according to claim 5,
wherein said pressing member (82; 128; 168) is a cam roller (82; 128; 168), and
wherein said cam roller (82; 128; 168) is to be rotated when a member that is in contact with said cam roller (82; 128; 168) is moved in the clutch engaging direction or in the clutch releasing direction.

7. The clutch engaging/releasing device (118; 158) according to claim 3 or 4,
wherein said second member (124; 164) has a recess (139; 178) in a surface thereof that is opposed to said pressing-member supporting member (138; 180) in the opposed direction, and
wherein said cam follower (126; 166) is in contact at the other end portion with said recess (139; 178) when said first and second members (122, 124; 162, 164) are adjacent to each other.

8. The clutch engaging/releasing device (10; 118; 158) according to claim 1,
wherein said second member (80; 124; 164) is located on a front side of said first member (78; 122; 162) in the clutch releasing direction, and
wherein said first and second members (78, 80; 122, 124; 162, 164) are in contact with each other when said first and second members (78, 80; 122, 124; 162, 164) are adjacent to each other.

9. The clutch engaging/releasing device (118) according to claim 3,
wherein, when said first member (122) is moved toward said second member (124) by the operation of said clutch pedal (50) after said first and second members (122, 124) have been separated from each other, said cam follower (126) is in contact at said another end portion thereof with said inclined surface (134), and said inclined surface (134) converts the load (F) applied to said inclined surface (134) from said pressing member (128) through said cam follower (126), into a converted force (F2) that forces said second member (124) in the clutch releasing direction, such that a reaction force (F3) acting against the converted force (F2) is transmitted to said first member (122) through said cam follower (126), and forces said first member (122) in the clutch engaging direction so as to act as the pedal reaction force (F2).

10. The clutch engaging/releasing device (118) according to claim 1,
wherein said pressing member (128) is supported by a pressing-member supporting member (138), and is opposed to said first and second members (122, 124) in an opposed direction,
wherein said reaction-force generating mechanism (135) further includes a cam follower (126) connected at an end portion thereof to said first member (122) and pivotable relative to said first member (122) about said end portion thereof,
wherein said pressing member (128) is in contact with a contact surface (126a) of said cam follower (126), and is forced in a direction perpendicular to the clutch engaging and releasing directions,
wherein said inclined surface (126a) is constituted by said contact surface (126a) of said cam follower (126),
wherein, when said first and second members (122, 124) are separated from each other, said cam follower (126) is to be in contact at another end portion thereof with a cam profile surface (134) of said second member (124), with said contact surface (126a) of said cam follower (126) being inclined with respect to a direction parallel to the clutch engaging and releasing directions such that a distance between said contact surface (126a) of said cam follower (126) and said pressing-member supporting member (138) in the opposed direction is increased in the clutch releasing direction, and
wherein, when said first member (122) is moved toward said second member (124) by the operation of said clutch pedal (50), said contact surface (126a) converts the load (F) into, as the pedal reaction force (F2), a converted force (F2) that forces said first member (122) in the clutch engaging direction.

11. The clutch engaging/releasing device (10; 118; 158) according to claim 1,
wherein said pressing member (82; 128; 168) is supported by a pressing-member supporting member (98; 138; 180), and is opposed to said first and second members (78, 80; 122, 124; 162, 164) in an opposed direction,
wherein said inclined surface (94b; 126a; 176) is provided in said first member (78; 162) or a connected member (126) connected to said first member (122), and is inclined with respect to a direction parallel to the clutch engaging and releasing directions such that a distance between said inclined surface (94b; 126a; 176) and said pressing-member supporting member (98; 128; 180) in the opposed direction is increased in the clutch releasing direction, and
wherein, when said first member (78; 122; 162) is moved toward said second member (80; 124; 164) by the operation of said clutch pedal (50) after said first and second members (78, 80; 122, 124; 162, 164) have been separated from each other, said pressing member (82; 128; 168) is in contact with said inclined surface (94b; 126a; 176), and said inclined surface (94b; 126a; 176) converts the load (F) into, as the pedal reaction force (F2), a converted force (F2) that forces said first member (78; 122; 162) in the clutch engaging direction.
